# EUROPÄISCHE PATENTSCHRIFT

(11) **EP 2 688 729 B1**
(45) Veröffentlichungstag und Bekanntmachung des Hinweises auf die Patenterteilung: **09.11.2016**
(21) Anmeldenummer: 12713648.9
(22) Anmeldetag: 23.03.2012
(51) Int. Cl.: B29C 65/48, B21D 21/00, B64C 1/12, B29C 70/84, B29C 73/10, B32B 15/08, B32B 7/12, B32B 15/20, B32B 37/04, B32B 38/16, B32B 38/18, B29K 101/12, B29C 65/50, B29C 70/08

(54) **VERFAHREN ZUR HERSTELLUNG EINES STRUKTURBAUTEILS**
METHOD FOR PRODUCING A STRUCTURAL COMPONENT
PROCÉDÉ DE PRODUCTION D'UN COMPOSANT STRUCTURAL

(30) Priorität: 24.03.2011 DE 102011006032; 24.03.2011 US 201161466964 P
(43) Veröffentlichungstag der Anmeldung: 29.01.2014
(60) Teilanmeldung: 16154858.1
(73) Patentinhaber: Airbus Operations GmbH, 21129 Hamburg (DE)
(72) Erfinder: PACCHIONE, Marco, 22605 Hamburg (DE); FIDEU, Paulin, 21682 Stade (DE)
(74) Vertreter: Isarpatent
(86) Internationale Anmeldenummer: PCT/EP2012/055223
(87) Internationale Veröffentlichungsnummer: WO 2012/127038

(56) Entgegenhaltungen:
- EP-A1- 0 473 843
- EP-A1- 1 103 370
- EP-A1- 2 075 297
- EP-A2- 0 547 664
- DE-A1- 10 047 491
- DE-A1-102009 018 151
- DE-B3-102005 033 992

## Beschreibung

Die vorliegende Erfindung bezieht sich auf ein Verfahren zur Herstellung eines Strukturbauteils, insbesondere für die Luft- oder Raumfahrt.

Obwohl die vorliegende Erfindung auf Strukturbauteile auf beliebigen Gebieten der Technik, zum Beispiel auch bei unterschiedlichsten Konstruktionen, bei denen eine Leichtbauweise angestrebt wird, anwendbar ist, werden die Erfindung und die ihr zugrunde liegende Problematik nachfolgend im Hinblick auf Strukturbauteile für Luft- oder Raumfahrzeuge, insbesondere für Flugzeuge, näher erläutert, ohne die Erfindung jedoch dahingehend einzuschränken.

Bei Luft- und Raumfahrzeugen wird bekanntermaßen in der Regel angestrebt, das Strukturgewicht möglichst weitgehend zu verringern, ohne Einbußen bei den mechanischen Eigenschaften wie etwa Belastbarkeit und Steifigkeit der Struktur hinnehmen zu müssen. Seit längerem kommen daher auf diesem Gebiet dünnwandige, mit Versteifungselementen wie etwa Spanten und Stringern versteifte Schalenbauteile aus Aluminium, zum Beispiel für den Rumpf eines Flugzeugs, zum Einsatz. Um den Anforderungen im Hinblick auf ein gutes Strömungsverhalten eines Luftfahrzeugs im Fluge Rechnung zu tragen, ist die Haut derartiger Schalen heutzutage oftmals im Raum, mit anderen Worten, in drei Raumdimensionen, gekrümmt. Zusätzlich werden bei modernen Verkehrsflugzeugen hohe Anforderungen an die Genauigkeit, mit der eine vorgegebene, beispielsweise durch Simulation bestimmte Zielgeometrie der Flugzeugaußenhaut in der Herstellung erreicht werden soll, gestellt.

Die Formgebung der Schalenhaut kann zum Beispiel durch Kriechumformen bewerkstelligt werden. In der DE 100 47 491 A1 und der US 7,217,331 B2 ist ein Verfahren zum Kriechumformen von Strukturen aus Aluminiumlegierungen unter der Einwirkung von Wärme beschrieben, durch welches ein "Zurückfedern" der umgeformten Struktur, der so genannte "Spring back"-Effekt, nach dem Entnehmen der Struktur aus der Form vermieden werden soll. Mit Hilfe dieses vorbekannten Verfahrens soll erreicht werden, dass die zum Umformen verwendeten Formen bereits mit der angestrebten Endgeometrie der Struktur versehen werden können. Eine aufwendige und komplizierte Simulation des "Spring back" zur Ermittlung einer abweichenden Geometrie der verwendeten Formen soll vermieden werden.

Die EP 2 075 297 A1 beschreibt Heissschmelzklebstoffzusammensetzungen, insbesondere für das Verkleben von Polyolefin-Folien. Ein Verbundkörper, aufweisend eine Polyolefin-Folie, eine Heissschmelzklebstoffzusammensetzung sowie ein Substrat, wird beschrieben.

Die EP 0 473 843 A1 beschreibt das Verkleben von Blechen eines Laminats mittels einer Klebeschicht. Erst nach einem Verformen wird eine Erwärmung zur Aushärtung der Bleche vorgenommen.

Die EP 0 547 664 A2 beschreibt ein Verfahren zur Warmverformung einer Komponente aus einem Laminatmaterial, welches eine thermoplastische Kunststoffmaterialschicht zwischen zwei Metallschichten aufweist.

Die Herstellung von mehrfach gekrümmten Schalenbauteilen ist jedoch dennoch weiterhin mit einem großen Zeit- und Kostenaufwand verbunden. Das Umformen von Hautelementen und Versteifungselementen für derartige Schalenbauteile einerseits und das Befestigen der Versteifungselemente an den Hautelementen andererseits in jeweils separaten Arbeitsgängen führen zu einem hohen Aufwand bei der Handhabung der Werkstücke und einem recht langwierigen Herstellungsprozess. Eine Verringerung des Handhabungsaufwands und der Fertigungsdauer wären wünschenswert. Bei einem getrennten Umformen von Hautelementen und Versteifungselementen ist ein hoher Aufwand erforderlich, um sicherzustellen, dass diese Bauelemente anschließend passgenau miteinander verbunden werden können. Diesen Zustand gilt es zu verbessern.

Vor diesem Hintergrund ist es Aufgabe der vorliegenden Erfindung, den zur Herstellung derartiger Strukturbauteile erforderlichen Aufwand zu verringern und die Anzahl der zur Herstellung durchzuführenden Verfahrensschritte zu vermindern.

Erfindungsgemäß wird diese Aufgabe durch ein erstes Verfahren zur Herstellung eines Strukturbauteils mit den Merkmalen des Patentanspruchs 1 gelöst.

Ein erstes Verfahren zur Herstellung eines Strukturbauteils mit zumindest zwei miteinander mittels eines thermoplastischen Kunststoffmaterials verbundenen Bauteilkomponenten, insbesondere für die Luft- oder Raumfahrt, weist erfindungsgemäß folgende Verfahrensschritte auf:
- eine erste Bauteilkomponente und eine zweite Bauteilkomponente werden bereitgestellt und angeordnet, wodurch eine Anordnung gebildet wird; und
- die Anordnung wird durch Kriechumformen umgeformt; eine Temperatur, bei der das Kriechumformen erfolgt, wird in der Weise gewählt, dass das thermoplastische Kunststoffmaterial während des Kriechumformens zumindest teilweise aufschmilzt, um die erste Bauteilkomponente und die zweite Bauteilkomponente miteinander zu verbinden.

Ein erfindungsgemäßes erstes Strukturbauteil, insbesondere für ein Luft- oder Raumfahrzeug, wird vorzugsweise mittels eines derartigen ersten Verfahrens hergestellt. Das Strukturbauteil weist eine erste Bauteilkomponente und eine zweite Bauteilkomponente auf. Die erste Bauteilkomponente und die zweite Bauteilkomponente sind hierbei mittels eines thermoplastischen Kunststoffmaterials, das zwischen der ersten und der zweiten Bauteilkomponente angeordnet ist, miteinander verbunden. Vorzugsweise bildet das thermoplastische Kunststoffmaterial somit eine dünne Haftungsschicht zwischen den ersten und zweiten Bauteilkomponenten im Gegensatz zu eine strukturelle Schicht.

Gemäß der Erfindung wird ferner ein Luft- oder Raumfahrzeug mit einem derartigen ersten Strukturbauteil vorgeschlagen.

Erfindungsgemäß wird darüber hinaus ein zweites Verfahren zur Herstellung eines Strukturbauteils mit zumindest zwei miteinander verbundenen Bauteilkomponenten vorgeschlagen, welches ebenfalls insbesondere für die Luft- oder Raumfahrt nützlich sein kann. Das Verfahren weist die folgenden Schritte auf:
- eine erste Bauteilkomponente und eine zweite Bauteilkomponente werden bereitgestellt, wobei die zweite Bauteilkomponente als Verbundkomponente mit einer Matrix aus einem thermoplastischen Kunststoffmaterial ausgebildet wird; hierbei werden vorzugsweise Verstärkungsfasern, insbesondere Glasfasern, Kohlefasern oder Zylonfasern, in die Matrix eingebettet;
- die erste Bauteilkomponente und die zweite Bauteilkomponente werden angeordnet, wodurch eine Anordnung gebildet wird; und
- die Anordnung wird durch Kriechumformen umgeformt; das Kriechumformen wird bei einer Temperatur durchgeführt, welche in der Weise gewählt wird, dass das thermoplastische Kunststoffmaterial der Matrix während des Kriechumformens erweicht, ohne aufzuschmelzen, wodurch die zweite Bauteilkomponente während des Kriechumformvorgangs umgeformt werden kann.

Die Erfindung stellt darüber hinaus ein zweites Strukturbauteil, insbesondere für ein Luft- oder Raumfahrzeug, bereit, welches bevorzugt mittels des zweiten erfindungsgemäßen Verfahrens zur Herstellung eines Strukturbauteils hergestellt ist. Ein derartiges Strukturbauteil weist eine erste Bauteilkomponente und eine zweite Bauteilkomponente auf. Die zweite Bauteilkomponente ist hierbei als Verbundkomponente mit einer Matrix aus einem thermoplastischen Kunststoffmaterial ausgebildet und mit der ersten Bauteilkomponente verbunden.

Die Erfindung schafft ferner ein Luft- oder Raumfahrzeug mit einem derartigen zweiten Strukturbauteil.

Ferner wird erfindungsgemäß ein Verfahren zur Herstellung eines Halbzeugs für die Fertigung eines Strukturbauteils bereitgestellt. Das Halbzeug kann zur Fertigung des Strukturbauteils einer Kriechumformung unterzogen werden und insbesondere im Bereich der Luft- oder Raumfahrt Anwendung finden. Das Halbzeug weist zumindest zwei miteinander mittels einer Schicht eines thermoplastischen Kunststoffmaterials verbundene Lagen eines durch Kriechumformen umformbaren Materials auf. Zur Herstellung des Halbzeugs werden folgende Verfahrensschritte ausgeführt:
- eine erste Lage und eine zweite Lage werden bereitgestellt und übereinander angeordnet, um einen Stapel zu bilden; und
- der Stapel wird auf eine Temperatur erwärmt, welche in der Weise gewählt wird, dass das thermoplastische Kunststoffmaterial zumindest teilweise aufschmilzt, um die erste Lage und die zweite Lage miteinander zu verbinden.

Ein erfindungsgemäßes Halbzeug für die Herstellung eines Strukturbauteils durch Kriechumformen des Halbzeugs, insbesondere für die Luft- oder Raumfahrt, wird bevorzugt mittels eines derartigen Verfahrens zur Herstellung eines Halbzeugs hergestellt und weist zumindest zwei Lagen eines durch Kriechumformen umformbaren Materials auf. Zwischen den zumindest zwei Lagen ist hierbei eine Schicht eines thermoplastischen Kunststoffmaterials angeordnet, die vorzugsweise eine dünne Haftungsschicht bildet.

Erfindungsgemäß ist ferner eine Reparaturverfahren für ein Strukturbauteil mit einer Schadstelle vorgesehen. Das Reparaturverfahren kann insbesondere auf dem Gebiet der Luft- oder Raumfahrt Anwendung finden und weist die folgenden Verfahrensschritte auf:
- ein Doppler mit zumindest einer Lage eines durch Kriechumformen umformbaren Materials und zumindest einer Schicht eines thermoplastischen Kunststoffmaterials wird bereitgestellt;
- der Doppler wird auf dem Strukturbauteil in der Weise angeordnet, dass der Doppler die Schadstelle abdeckt und dass die Schicht des thermoplastischen Kunststoffmaterials mit dem Strukturbauteil in Berührung tritt; und
- der Doppler wird auf eine Temperatur erwärmt, welche in der Weise gewählt wird, dass das thermoplastische Kunststoffmaterial für ein Verbinden der Lage mit dem Strukturbauteil zumindest teilweise aufschmilzt.

Gemäß der Erfindung ist darüber hinaus auch ein Halbzeug für die Reparatur eines Strukturbauteils, insbesondere für die Luft- oder Raumfahrt, vorgesehen, welches bevorzugt bei der Durchführung des erfindungsgemäßen Reparaturverfahrens zur Verwendung kommt. Das Halbzeug für die Reparatur eines Strukturbauteils weist zumindest eine erste Lage eines durch Kriechumformen umformbaren Materials auf. Auf der ersten Lage ist eine freiliegende Schicht eines thermoplastischen Kunststoffmaterials angeordnet.

Die der vorliegenden Erfindung zugrunde liegende Idee besteht darin, in demselben Arbeitsschritt zumindest eine Bauteilkomponente oder Lage unter Erwärmung einer Kriechumformung unterziehen zu können und zugleich bei der für das Kriechumformen gewählten Temperatur ein thermoplastisches Kunststoffmaterial zu verarbeiten. Bei dem Verarbeiten des thermoplastischen Kunststoffmaterials kann dieses erweichen und/oder wenigstens teilweise aufschmelzen, wodurch das thermoplastische Kunststoffmaterial verformt werden kann und bei wenigstens teilweisem Aufschmelzen auch die Herstellung dauerhafter Verbindungen ermöglicht.

Mit dieser Idee können die erste und zweite Bauteilkomponente bzw. die erste und zweite Lage miteinander verbunden und die mit den Bauteilkomponenten gebildete Anordnung bzw. der mit den Lagen gebildete Stapel in demselben Verfahrensschritt umgeformt werden.

In Übereinstimmung mit diesem Konzept besteht die Idee der vorliegenden Erfindung auch darin, den Doppler im selben Arbeitsgang mit dem zu reparierenden Bauteil verbinden und ihn gleichzeitig durch Umformen an die Geometrie dieses Bauteils anpassen zu können.

Das Verbinden gelingt durch wenigstens teilweises Aufschmelzen des thermoplastischen Materials. Bei der Herstellung des Strukturbauteils nach dem erfindungsgemäßen ersten Verfahren wird die erforderliche Temperatur während des Kriechumformvorgangs erreicht. Durch das Aufschmelzen kann das thermoplastische Kunststoffmaterial mit Oberflächen der Bauteilkomponenten, Oberflächen der Lagen des Halbzeugs oder Oberflächen des beschädigten Strukturbauteils und der Lage des Dopplers in innigen Kontakt treten. Kühlt die Anordnung mit erster und zweiter Bauteilkomponente, der Stapel bzw. der Doppler und das Strukturbauteil mit der Schadstelle danach wieder ab, dann kann das thermoplastische Kunststoffmaterial durch Wiedererstarren die beiden Bauteilkomponenten, die Lagen des Halbzeugs oder die Lage des Dopplers und das Strukturbauteil dauerhaft miteinander verbinden.

Die Erfindung bewirkt somit vorteilhaft eine Reduzierung der zur Herstellung des Strukturbauteils notwendigen Arbeitsschritte, da die Verbindung der ersten und zweiten Bauteilkomponenten miteinander und das Umformen der Bauteilkomponenten bei dem erfindungsgemäßen ersten Herstellverfahren für ein Strukturbauteil in demselben Arbeitsgang erfolgen können. Der Aufwand für Aufspannvorgänge, Zwischenlagerung und Handhabung wird deutlich verringert. Das erfindungsgemäße Verfahren zur Herstellung eines Halbzeugs für die Herstellung eines Strukturbauteils ermöglicht es, einzelne Lagen des Halbzeugs miteinander verbinden und gleichzeitig das Halbzeug umformen zu können, um dieses für die weitere Verarbeitung bereits vorzuformen. Das erfindungsgemäße Reparaturverfahren ermöglicht eine schnelle und kostengünstige Reparatur von Beschädigungen des Strukturbauteils. Ein Vorfertigen eines in Krümmung und Form exakt passgenauen Dopplers ist nicht erforderlich. Der Doppler kann stattdessen aus dem erfindungsgemäßen Halbzeug vor Ort zugeschnitten werden.

Das gemäß der Erfindung vorgesehene Verbinden von Bauteilkomponenten oder Lagen mittels eines thermoplastischen Kunststoffmaterials durch Aufschmelzen desselben ist darüber hinaus von Vorteil, da in dem thermoplastischen Kunststoffmaterial keine Lösungsmittel vorhanden sind.

Ferner ermöglicht die der Erfindung zugrunde liegende Idee vorteilhaft, umgeformte Bauteilkomponenten für ein Strukturbauteil zu erzeugen, die durch das gemeinsame Umformen dort, wo sie im fertigen Strukturbauteil miteinander verbunden sind, im Hinblick auf ihre Formgebung passgenau aufeinander abgestimmt sind. Es gelingt durch die Erfindung, ein mit zwei umgeformten Bauteilkomponenten gebildetes Strukturbauteil zu erzeugen, bei dem eine Verbundkomponente mit einer Kunststoffmatrix präzise und wirtschaftlich zur Anpassung an eine Zielgeometrie einer ersten Bauteilkomponente umgeformt wird.

Erfindungsgemäße Strukturbauteile können im Vergleich zu vorbekannten Strukturbauteilen in kürzerer Zeit und damit auch deutlich kostengünstiger gefertigt werden. Aus den erfindungsgemäßen Halbzeugen können Strukturbauteile kostengünstig und zeitsparend hergestellt werden.

Vorteilhafte Ausgestaltungen, Weiterbildungen und Verbesserungen der Erfindung ergeben sich aus den Unteransprüchen sowie aus der Beschreibung unter Bezugnahme auf die Figuren der Zeichnung.

Gemäß einer Weiterbildung des ersten erfindungsgemäßen Verfahrens zur Herstellung eines Strukturbauteils und gemäß einer Weiterbildung des erfindungsgemäßen ersten Strukturbauteils werden die erste Bauteilkomponente oder die zweite Bauteilkomponente oder beide Bauteilkomponenten zumindest teilweise aus einem Metall, insbesondere aus einer Aluminium-Magnesium-Legierung, auch mit AlMg-Legierung bezeichnet, oder einer Aluminium-Magnesium-Scandium-Legierung, nachfolgend auch mit AlMgSc-Legierung bezeichnet, ausgebildet. Gemäß einer Weiterbildung des erfindungsgemäßen zweiten Verfahrens zur Herstellung eines Strukturbauteils und einer Weiterbildung des erfindungsgemäßen zweiten Strukturbauteils wird die erste Bauteilkomponente zumindest teilweise aus einem Metall, insbesondere aus einer Aluminium-Magnesium-Legierung oder einer Aluminium-Magnesium-Scandium-Legierung, ausgebildet. Derartige Aluminiumlegierungen und insbesondere AlMgSc-Legierungen eignen sich für die erfindungsgemäßen Verfahren zur Herstellung eines Strukturbauteils besonders gut, da sie im Gegensatz zu anderen Aluminiumlegierungen bei höheren Temperaturen kriechumgeformt werden können, ohne dass die günstigen, insbesondere mechanischen, Eigenschaften der Legierung verloren gehen. Denn viele herkömmliche Al-Legierungen erzielen u.a. ihre Härtestufe und Festigkeit durch eine Wärmebehandlung, so dass sie dann nicht mehr über ca. 170°C erwärmt werden können, ohne einen Verlust dieser Eigenschaften zu riskieren. Ein Kriechumformen solche Legierungen bei Temperaturen über 200°C kommt somit nicht in Frage, weil eine neue Wärmebehandlung notwendig wäre. Insbesondere kann ein Kriechumformen von Bauteilkomponenten aus AlMg- oder AlMgSc-Legierungen in Temperaturbereichen erfolgen, in denen auch die Verarbeitungstemperaturen von für die Verbindung der ersten und der zweiten Bauteilkomponente oder für die Bildung der Matrix der Verbundkomponente bevorzugten Thermoplasten liegen.

In einer Ausgestaltung des erfindungsgemäßen Verfahrens zur Herstellung eines Halbzeugs und in einer Ausgestaltung der erfindungsgemäßen Halbzeuge werden die erste Lage oder die erste Lage und die zweite Lage zumindest teilweise aus einem Metall, insbesondere aus einer Aluminium-Magnesium-Legierung oder einer Aluminium-Magnesium-Scandium-Legierung, ausgebildet. Vorteilhaft kann insbesondere bei der Verwendung von AlMgSc-Legierungen das Halbzeug bereits während seiner Herstellung oder bei einer späteren Weiterverarbeitung durch Kriechumformung bei Temperaturen umgeformt werden, die günstig für das Verarbeiten und Aufschmelzen eines geeigneten thermoplastischen Hochleistungskunststoffes sind, ohne dass die mechanischen Eigenschaften der Lagen unter der Wärmebehandlung leiden. Das Verbinden der Lagen des derart ausgestalteten Halbzeugs für die Herstellung eines Strukturbauteils miteinander kann somit in einer Variante auch erst bei der Weiterverarbeitung des Halbzeugs in das Endprodukt durch Kriechumformen bei entsprechenden Temperaturen erfolgen. Ein Doppler aus einem derart weitergebildeten Halbzeug für die Reparatur eines Strukturbauteils behält auch beim Erwärmen auf eine für das Aufschmelzen des thermoplastischen Kunststoffmaterials erforderliche Temperatur seine günstigen mechanischen Eigenschaften, wodurch eine qualitativ hochwertige Reparatur möglich wird.

Gemäß einer Weiterbildung des erfindungsgemäßen Reparaturverfahrens ist vorgesehen, dass die Lage des Dopplers zumindest teilweise aus einem Metall, insbesondere aus einer Aluminium-Magnesium-Legierung oder einer Aluminium-Magnesium-Scandium-Legierung, ausgebildet wird und dass das Reparaturverfahren insbesondere zum Reparieren eines zumindest teilweise aus einem Metall, bevorzugt aus einer Aluminium-Magnesium-Legierung oder einer Aluminium-Magnesium-Scandium-Legierung, ausgebildeten Strukturbauteils eingesetzt wird. Ein Strukturbauteil insbesondere aus einer AlMgSc-Legierung kann zum Reparieren ganz oder abschnittsweise auf die Temperaturen, welche zum Aufschmelzen des thermoplastischen Materials günstig sind, erwärmt werden, ohne dass sich dies nachteilig auf die mechanischen Eigenschaften des Strukturbauteils auswirken würde.

In Rahmen der vorliegenden Anmeldung kommen als AlMgSc-Legierungen auch nanostrukturierte Aluminium-Magnesium-Scandium-Legierungen in Betracht. Die Aluminium-Magnesium-Scandium-Legierungen können zusätzlich zu den genannten Bestandteilen auch noch weitere, hier nicht ausdrücklich genannte Legierungsbestandteile enthalten. Als Beispiele für AlMgSc-Legierungen, die für die Ausführung der vorliegenden Erfindung in Betracht gezogen werden können, können die Legierungen KO8242 und KO8542, die Legierungen C557 und C586 des Aluminiumherstellers ALCOA Inc., sowie darüber hinaus auch die als Scalmalloy^{®} bezeichneten Legierungen genannt werden. Auch andere Aluminium-Magnesium-Scandium-Legierungen als die vorstehend genannten können jedoch geeignet sein, um die in der vorliegenden Anmeldung beschriebenen Verfahren auszuführen und die hier beschriebenen Strukturbauteile oder Halbzeuge herzustellen.

Gemäß einer Verbesserung des erfindungsgemäßen Verfahrens zur Herstellung eines Halbzeugs wird der Stapel zur Bildung eines Halbzeugs mit einer gekrümmten Geometrie während des Erwärmens einem Kriechumformen unterzogen. Das auf diese Weise hergestellte Halbzeug besitzt dadurch bereits eine für eine nachfolgende Verarbeitung günstige Formgebung, kann jedoch später auch einem weiteren Kriechumformprozess unterzogen werden.

In einer Ausgestaltung der erfindungsgemäßen Verfahren zur Herstellung eines Strukturbauteils und einer Ausgestaltung des erfindungsgemäßen Verfahrens zur Herstellung eines Halbzeugs erfolgt das Kriechumformen mittels einer Form, welche eine Oberfläche aufweist, deren Geometrie einer Oberflächengeometrie des herzustellenden Strukturbauteils in dessen fertigem Zustand im Wesentlichen entspricht. Dies ist vorteilhaft, da auf eine aufwendige Simulation des Umformvorgangs oder aufwendige Versuche zur Ermittlung einer von der angestrebten Endgeometrie abweichenden Formgeometrie, wie dies beim Auftreten eines "Spring back" erforderlich ist, verzichtet werden kann.

Gemäß einer Weiterbildung der erfindungsgemäßen Verfahren zur Herstellung eines Strukturbauteils und einer Weiterbildung des erfindungsgemäßen Verfahrens zur Herstellung eines Halbzeugs kann die zur Formgebung eingesetzte Form als eine männliche oder eine weibliche Form ausgebildet sein. Auf diese Weise können Strukturbauteile und Halbzeuge unterschiedlichster Geometrie auf sehr effiziente Weise hergestellt werden.

Gemäß einer weiteren Ausgestaltung der erfindungsgemäßen Verfahren zur Herstellung eines Strukturbauteils wird der Anordnung bei der Kriechumformung eine zwei- oder dreidimensional gekrümmte Form gegeben. Hierbei können die erste und die zweite Bauteilkomponente in einem Verfahrensschritt gleichzeitig umgeformt werden. Das Herstellverfahren wird dadurch noch effizienter. Falls die zweite Bauteilkomponente aufgrund ihrer Anordnung, Größe oder Gestaltung während des Kriechumformens der ersten Bauteilkomponente jedoch kein Umformen erfordert, kann auch im Wesentlichen nur die erste Bauteilkomponente kriechumgeformt werden.

Eine Ausgestaltung der erfindungsgemäßen Strukturbauteile sieht vor, dass die erste Bauteilkomponente und/oder die zweite Bauteilkomponente zwei- oder dreidimensional gekrümmt sind/ist. Mit anderen Worten, die erste und/oder zweite Bauteilkomponente sind entlang einer oder mehrerer Raumrichtungen mit einer Krümmung versehen. Derartige Strukturbauteile eignen sich gut dafür, in modernen Luft- oder Raumfahrzeugen mit komplexer Außengeometrie eingesetzt zu werden.

Bei einer Ausgestaltung des erfindungsgemäßen Halbzeugs für die Herstellung eines Strukturbauteils und gemäß einer Ausgestaltung des erfindungsgemäßen Verfahrens zur Herstellung des Halbzeugs wird das Halbzeug zwei- oder dreidimensional gekrümmt ausgebildet. Dadurch ist es vorteilhaft für nachfolgende Verarbeitungsschritte bereits vorgeformt. Das Halbzeug kann stattdessen aber auch als ebenes Material ausgebildet werden.

In einer Ausgestaltung der erfindungsgemäßen Verfahren zur Herstellung eines Strukturbauteils oder des erfindungsgemäßen Verfahrens zur Herstellung eines Halbzeugs wird zum Kriechumformen eine Kraft und/oder ein Druck auf die Anordnung oder den Stapel aufgebracht, beispielsweise mit Hilfe eines Vakuumsacks oder einer Gegenform. Dies ermöglicht es, die Anordnung bzw. den Stapel präzise an die Form anzulegen und während der Erwärmung in der angestrebten umgeformten Gestalt zu halten, bis sich die Anordnung oder der Stapel durch Kriechen dauerhaft verformt hat.

In einer weiteren Ausgestaltung der erfindungsgemäßen Verfahren zur Herstellung eines Strukturbauteils oder des erfindungsgemäßen Verfahrens zur Herstellung eines Halbzeugs erfolgt das Kriechumformen in einem Autoklaven oder in einem Ofen. Die Verwendung eines Autoklaven kann vorteilhaft sein, wenn als das thermoplastische Kunststoffmaterial ein modernes Hochleistungsthermoplast verwendet wird.

Gemäß einer Weiterbildung des erfindungsgemäßen Halbzeugs für die Herstellung eines Strukturbauteils und gemäß einer Weiterbildung des Verfahrens zur Herstellung eines Halbzeugs werden die beiden Lagen des Halbzeugs mittels der Schicht des thermoplastischen Kunststoffmaterials miteinander verbunden. Das Halbzeug kann mit verbundenen Lagen leichter gehandhabt werden, was die Weiterverarbeitung erleichtert.

Bei einer weiteren Weiterentwicklung des erfindungsgemäßen ersten Verfahrens zur Herstellung eines Strukturbauteils wird das thermoplastische Kunststoffmaterial beim Bilden der Anordnung als Schicht zwischen die erste Bauteilkomponente und die zweite Bauteilkomponente eingebracht. In einer Ausgestaltung des erfindungsgemäßen ersten Strukturbauteils bildet das thermoplastische Kunststoffmaterial somit eine Schicht zwischen der ersten und der zweiten Bauteilkomponente. Dies ermöglicht ein zuverlässiges, flächiges Verbinden der ersten und zweiten Bauteilkomponente durch Haften des zumindest teilweise aufgeschmolzenen und sich beim Abkühlen verfestigenden thermoplastischen Kunststoffmaterials an möglichst großen Oberflächenabschnitten der Bauteilkomponenten.

Bei einer weiteren Weiterbildung des erfindungsgemäßen ersten Verfahrens zur Herstellung eines Strukturbauteils wird das thermoplastische Kunststoffmaterial beim Bilden der Anordnung als Film oder als Folie zwischen die erste Bauteilkomponente und die zweite Bauteilkomponente eingelegt. Gemäß einer Ausgestaltung des erfindungsgemäßen Verfahrens zur Herstellung eines Halbzeugs wird das thermoplastische Kunststoffmaterial beim Bilden des Stapels als Film oder als Folie zwischen die erste Lage und die zweite Lage eingelegt. Das thermoplastische Kunststoffmaterial kann hierbei als Film oder Folie vorproduziert und je nach Erfordernis bei dem herzustellenden Strukturbauteil oder Halbzeug passend zugeschnitten werden. Ein derartiger Film bzw. eine derartige Folie kann für eine gleichbleibende, konstante Dicke der Thermoplastschicht zwischen den Bauteilkomponenten oder den Lagen, für ein gleichmäßiges Aufschmelzen des thermoplastischen Kunststoffmaterials und für eine gleichmäßige Güte der Verbindung der Bauteilkomponenten oder Lagen von Vorteil sein. Vorzugsweise liegt eine Dicke oder eine Stärke des Films oder der Folie in einem Bereich von 0,1 mm bis 0,6 mm, und weiter bevorzugt in einem Bereich von 0,1 mm bis 0,2 mm. Dabei bildet der Film bzw. die Folie eine reine Haftungsschicht zum Binden der Bauteilkomponente oder der Lagen miteinander.

Ferner wird bei einer Ausgestaltung des erfindungsgemäßen Reparaturverfahrens das thermoplastische Kunststoffmaterial beim Anordnen des Dopplers auf dem Strukturbauteil als Film oder als Folie zwischen die Lage und das Strukturbauteil eingelegt, wodurch sich wiederum die eben genannten Vorteile ergeben. Derartige Filme oder Folien können auch für die Reparatur vorgefertigt und zusammen mit der Lage oder mit mehreren Lagen bereits geeignet zugeschnitten geliefert werden.

Gemäß einer Weiterbildung des erfindungsgemäßen ersten Verfahrens zur Herstellung eines Strukturbauteils wird die erste Bauteilkomponente oder die zweite Bauteilkomponente vor dem Bilden der Anordnung zumindest abschnittsweise mit dem thermoplastischen Kunststoffmaterial beschichtet. Alternativ hierzu können auch beide Bauteilkomponenten mit dem thermoplastischen Kunststoffmaterial beschichtet werden. Bei einer entsprechenden Ausgestaltung des erfindungsgemäßen Verfahrens zur Herstellung eines Halbzeugs wird die erste Lage oder die zweite Lage oder werden beide Lagen vor dem Bilden des Stapels zumindest abschnittsweise mit dem thermoplastischen Kunststoffmaterial beschichtet. Das Beschichten kann insbesondere durch thermisches Spritzen des thermoplastischen Kunststoffmaterials auf die jeweilige Bauteilkomponente bzw. Lage erfolgen. Bei dieser Weiterbildung ist es nicht erforderlich, ein aus dem thermoplastischen Kunststoffmaterial ausgebildetes separates Element beim Bilden der Anordnung bzw. des Stapels zwischen die Bauteilkomponenten oder die Lagen einzulegen. Stattdessen sind eine oder beide Bauteilkomponenten bzw. eine oder beide Lagen bereits mit der gewünschten Thermoplastschicht versehen. Dies erleichtert die Handhabung bei der Herstellung des Strukturbauteils oder des Halbzeugs weiter und reduziert auch die Vielfalt an bereitzustellenden Einzelteilen.

Bei einer entsprechenden Ausgestaltung des erfindungsgemäßen Reparaturverfahrens wird die Lage des Dopplers vor dem Anordnen des Dopplers auf dem Strukturbauteil zumindest abschnittsweise mit dem thermoplastischen Kunststoffmaterial beschichtet. Auch in diesem Fall kann das Beschichten insbesondere durch thermisches Spritzen des thermoplastischen Kunststoffmaterials auf die Lage erfolgen. Der Doppler mit der beschichteten Lage lässt sich dadurch leichter handhaben, was sich beim Reparieren lokaler Schadstellen an Strukturbauteilen als vorteilhaft erweisen kann, gerade dann, wenn das beschädigte Strukturbauteil nicht leicht in eine Werkstatt verbracht werden kann. Bei einem entsprechenden Halbzeug für die Reparatur eines Strukturbauteils ist die erste Lage in einer entsprechenden Ausgestaltung in dieser Weise beschichtet, wobei die Beschichtung die freiliegende Schicht des thermoplastischen Kunststoffmaterials bildet.

In einer Ausgestaltung der erfindungsgemäßen Verfahren sowie der erfindungsgemäßen Strukturbauteile und der erfindungsgemäßen Halbzeuge wird als thermoplastisches Kunststoffmaterial ein Hochleistungskunststoff, insbesondere ein Polyaryletherketon (PAEK), ein Polyetheretherketon (PEEK), ein Polyetherketon (PEK), ein Polyetherimid (PEI) oder ein Polyamidimid (PAI), verwendet. Derartige Hochleistungsthermoplaste eignen sich gut für mechanisch hochbeanspruchte Bauteile wie zum Beispiel Strukturbauteile von Luft- oder Raumfahrzeugen. Darüber hinaus liegen die Verarbeitungstemperaturen der genannten Kunststoffe für das Erweichen und/oder Aufschmelzen zum Umformen bzw. Verbinden der Bauteilkomponenten oder Lagen oder zum Anbringen des Dopplers in einem Temperaturbereich, in dem Bauteilkomponenten oder Lagen aus AlMgSc-Legierungen in ihren mechanischen Eigenschaften nicht beeinträchtigt werden und insbesondere auch einer Kriechumformung ohne "Spring back" unterzogen werden können.

In einer vorteilhaften Verbesserung der erfindungsgemäßen Verfahren sowie der erfindungsgemäßen Strukturbauteile und der erfindungsgemäßen Halbzeuge werden Verstärkungsfasern, bevorzugt Glasfasern, Kohlefasern oder Fasern aus dem unter dem Namen Zylon^{®} bekannt gewordenen Material Poly(p-phenylen-2,6-benzobisoxazol), nachfolgend als Zylonfasern bezeichnet, in das thermoplastische Kunststoffmaterial eingebettet. Auch eine Kombination dieser Fasertypen ist denkbar. Das Einbetten der Verstärkungsfasern kann vor dem Bilden der Anordnung bzw. des Stapels durchgeführt werden und kann bereits bei der Vorproduktion des Films oder der Folie aus dem thermoplastischen Material bzw. der Herstellung der Verbundkomponente mit der thermoplastischen Matrix erfolgen. Die Fasern können aber beispielsweise auch bei dem Aufspritzen des thermoplastischen Materials auf die erste und/oder zweite Bauteilkomponente oder die jeweilige Lage mit dem thermoplastischen Kunststoffmaterial umgeben werden. Insbesondere im Falle des Reparaturverfahrens kann es von Vorteil sein, zur besseren Handhabung die Fasern bereits vor dem Anordnen des Dopplers auf dem Strukturbauteil in das thermoplastische Kunststoffmaterial einzubetten. Alternativ ist es denkbar, die Verstärkungsfasern erst beim Erwärmen oder beim Kriechumformen durch Aufschmelzen des Thermoplasts in dieses einzubetten. Derartige Verstärkungsfasern können die mechanischen Eigenschaften des fertigen Strukturbauteils oder des Halbzeugs, zum Beispiel dessen Zugfestigkeit in Richtung des Faserverlaufs, erheblich steigern und auch die Schadenstoleranz des Strukturbauteils bzw. Halbzeugs verbessern. Mit dieser Ausgestaltung kann bei Fertigung der Lagen aus Metall, insbesondere aus einer AlMgSc-Legierung, auch ein Halbzeug in Gestalt eines Faser-Metall-Laminats (FML) geschaffen werden, welches ein geringes Gewicht aufweist und insbesondere entlang eines wählbaren Faserverlaufs hohe Festigkeit besitzt.

In einer bevorzugten Ausgestaltung des erfindungsgemäßen ersten Verfahrens zur Herstellung eines Strukturbauteils werden Oberflächen der ersten und/oder zweiten Bauteilkomponente, welche zum Verbinden der ersten und zweiten Bauteilkomponente mit dem thermoplastischen Kunststoffmaterial in Kontakt gebracht werden, vor dem Bilden der Anordnung vorbehandelt. In einer entsprechenden Ausgestaltung des erfindungsgemäßen Verfahrens zur Herstellung eines Halbzeugs werden Oberflächen der ersten Lage und zweiten Lage, welche zum Verbinden der Lagen mit dem thermoplastischen Kunststoffmaterial in Kontakt gebracht werden, vor dem Bilden des Stapels vorbehandelt. Gemäß einer entsprechenden Ausgestaltung des erfindungsgemäßen Reparaturverfahrens erfolgt vor dem Anordnen des Dopplers auf dem Strukturbauteil eine Vorbehandlung von Oberflächen der Lage und des Strukturbauteils, welche zum Verbinden der Lage mit dem Strukturbauteil mit dem thermoplastischen Kunststoffmaterial in Kontakt gebracht werden. Die Vorbehandlung erfolgt hierbei jeweils in der Weise, dass die Haftung des thermoplastischen Kunststoffmaterials auf den Oberflächen durch Aufschmelzen und Wiedererstarren des thermoplastischen Kunststoffmaterials im Vergleich zu nicht vorbehandelten Oberflächen gesteigert wird. Bevorzugt werden die Oberflächen zur Vorbehandlung zunächst gereinigt und nachfolgend anodisiert. Die Oberflächen können aber zur Vorbehandlung stattdessen zum Beispiel auch gereinigt und dann mit einem Umwandlungsüberzug oder mit einer Sol-Gel-Schicht versehen werden. Auf diese Weise kann die Dauerhaftigkeit und Zuverlässigkeit der Verbindung der Bauteilkomponenten oder der Lagen weiter gesteigert werden. Eine besonders dauerhafte Reparatur einer Schadstelle kann erzielt werden.

In einer Weiterentwicklung der erfindungsgemäßen Verfahren wird bei der Vorbehandlung in einem weiteren Schritt zusätzlich eine Grundierung (Primer) auf die Oberfläche bzw. die Oberflächen aufgebracht. Bevorzugt erfolgt ein derartiges Grundieren nach dem Anodisieren, dem Aufbringen des Umwandlungsüberzugs oder dem Aufbringen der Sol-Gel-Schicht. Dies verbessert das Haften des thermoplastischen Kunststoffmaterials auf den Oberflächen noch weiter.

Gemäß einer weiteren Ausgestaltung der erfindungsgemäßen Verfahren zur Herstellung eines Strukturbauteils, des erfindungsgemäßen Verfahrens zur Herstellung eines Halbzeugs und des erfindungsgemäßen Reparaturverfahrens wird die Temperatur in einem Bereich von 250°C bis 375°C, bevorzugt in einem Bereich von 275°C bis 375°C, und weiter bevorzugt in einem Bereich von 275°C bis 325°C, gewählt. Bei Temperaturen in diesem Bereich gelingt ein Relaxieren von Spannungen in der Anordnung, im Stapel oder in dem Doppler, wenn diese einem Kriechumformen unterzogen werden. Mit einer Erwärmung auf Temperaturen in diesem Temperaturbereich können mehrere vorteilhafte Wirkungen zugleich erzielt werden: ein Zurückfedern oder "Spring back" der Anordnung, des Stapels oder des Dopplers nach dem Umformvorgang kann durch die Spannungsrelaxation vermieden werden; insbesondere bei der Verwendung von AlMgSc-Legierungen bleiben in diesem Temperaturbereich die günstigen Eigenschaften dieses Materials vollständig oder weitestgehend erhalten; zusätzlich können geeignete thermoplastische Kunststoffmaterialien aufgeschmolzen werden, um die Lagen oder Bauteilkomponenten zu verbinden oder eine Verbindung der Lage des Dopplers mit dem Strukturbauteil zu bewirken. Das Fehlen eines Zurückfederns, der Erhalt der Materialeigenschaften und das gleichzeitige Aufschmelzen erlauben damit auf höchst effiziente Weise beispielsweise die Herstellung eines fertig umgeformten Strukturbauteils aus zwei oder mehr Einzelkomponenten in einem einzigen Verfahrensschritt. Darüber hinaus kann bei der entsprechenden Ausgestaltung des erfindungsgemäßen zweiten Verfahrens zur Herstellung eines Strukturbauteils die thermoplastische Matrix einer Verbundkomponente in diesem Temperaturbereich in der Weise erweichen, dass die Verbundkomponente ebenfalls umgeformt werden kann, wodurch in einem Arbeitsgang zwei zueinander passgenau umgeformte Bauteilkomponenten hergestellt werden können.

Bei einer Ausgestaltung der erfindungsgemäßen Verfahren zur Herstellung eines Strukturbauteils wird die Anordnung während des Kriechumformens der Temperatur für eine Zeitdauer von zehn Minuten oder länger, bevorzugt für eine Zeitdauer im Bereich von zehn Minuten bis etwa drei Stunden, und weiter bevorzugt für eine Zeitdauer im Bereich von etwa 30 Minuten bis zwei Stunden, ausgesetzt.

Bei einer Ausgestaltung des erfindungsgemäßen Verfahrens zur Herstellung eines Halbzeugs wird der Stapel während des Erwärmens der Temperatur für eine Zeitdauer von zehn Minuten oder länger, und bevorzugt für eine Zeitdauer im Bereich von zehn Minuten bis etwa drei Stunden, ausgesetzt.

In einer Weiterbildung des erfindungsgemäßen Reparaturverfahrens wird der Doppler der Temperatur für eine Zeitdauer von zehn Minuten oder mehr, und bevorzugt für eine Zeitdauer im Bereich von zehn Minuten bis etwa drei Stunden, ausgesetzt.

In einer Ausgestaltung des erfindungsgemäßen ersten Verfahrens zur Herstellung eines Strukturbauteils wird dafür gesorgt, dass die Anordnung nach dem Kriechumformen und zumindest teilweisen Aufschmelzen des thermoplastischen Kunststoffmaterials wieder abkühlen kann, wobei das thermoplastische Kunststoffmaterial wieder fest wird und die erste und zweite Bauteilkomponente zur Bildung des Strukturbauteils dauerhaft verbindet.

Bei einer Weiterbildung des erfindungsgemäßen zweiten Verfahrens zur Herstellung eines Strukturbauteils wird dafür gesorgt, dass die Anordnung nach dem Kriechumformen wieder abkühlen kann, wobei das thermoplastische Kunststoffmaterial von dem erweichten, jedoch nicht aufgeschmolzenen Zustand wieder in den erhärteten Zustand übergeht. Auf diese Weise wird die nach dem Umformen erzielte Geometrie der Verbundkomponente fixiert.

Bei einer Ausgestaltung des erfindungsgemäßen Verfahrens zur Herstellung eines Halbzeugs wird dafür gesorgt, dass der Stapel nach dem Erwärmen und zumindest teilweisen Aufschmelzen des thermoplastischen Kunststoffmaterials wieder abkühlen kann, wobei das thermoplastische Kunststoffmaterial erstarrt und die Lagen zur Bildung des Halbzeugs dauerhaft verbindet.

In einer Weiterbildung des erfindungsgemäßen Reparaturverfahrens erfolgt nach dem Erwärmen und Aufschmelzen des thermoplastischen Kunststoffmaterials ein Abkühlen des Dopplers und gegebenenfalls auch eines erwärmten Abschnitts des zu reparierenden Strukturbauteils. Beim Erstarren oder Festwerden des thermoplastischen Kunststoffmaterials wird der Doppler mit dem Strukturbauteil zuverlässig verbunden.

In einer Ausgestaltung des erfindungsgemäßen zweiten Verfahrens zur Herstellung eines Strukturbauteils werden die erste und zweite Bauteilkomponente nach dem Kriechumformen, bevorzugt nach dem Abkühlen, miteinander zur Bildung des Strukturbauteils verbunden, beispielsweise durch Vernieten oder Verkleben.

Gemäß einer bevorzugten Weiterbildung der erfindungsgemäßen Verfahren zur Herstellung eines Strukturbauteils und in einer Ausgestaltung der erfindungsgemäßen Strukturbauteile wird das Strukturbauteil als ein Schalenbauteil ausgebildet, insbesondere als eine Rumpfschale oder ein Teil einer Rumpfschale eines Luft- oder Raumfahrzeugs, oder als eine Flügelschale oder ein Teil einer Flügelschale eines Luft- oder Raumfahrzeugs. Hierbei bildet die erste Bauteilkomponente eine Schalenhaut und die zweite Bauteilkomponente ein Versteifungselement, insbesondere einen Stringer, für die Schalenhaut. Gerade bei derartigen Schalenbauteilen sind oftmals eine Vielzahl von Einzelkomponenten umzuformen und/oder an der Schalenhaut zu befestigen. Die Erfindung ermöglicht in diesem Fall eine besondere effiziente Fertigung.

Bei einer Ausgestaltung der erfindungsgemäßen Verfahren zur Herstellung eines Strukturbauteils und der erfindungsgemäßen Strukturbauteile kann das hergestellte Strukturbauteil konkav oder konvex gekrümmt sein, wobei die zweite Bauteilkomponente, beispielsweise ein Stringer, auf einer nach außen oder nach innen gewölbten Oberfläche der ersten Bauteilkomponente, beispielsweise einer Schalenhaut, angeordnet werden kann.

Bei einer weiteren vorteilhaften Weiterentwicklung der erfindungsgemäßen Verfahren zur Herstellung eines Strukturbauteils und der erfindungsgemäßen Strukturbauteile wird die erste Bauteilkomponente aus einem Halbzeug mit mehreren Lagen eines durch Kriechumformen umformbaren Materials, zwischen welchen eine Schicht eines weiteren thermoplastischen Kunststoffmaterials, dessen Zusammensetzung mit jener des thermoplastischen Kunststoffmaterials übereinstimmt oder sich von dieser unterscheidet, angeordnet ist, ausgebildet. In das thermoplastische Material zwischen den Lagen können Verstärkungsfasern, zum Beispiel Glasfasern, Kohlefasern oder Zylonfaser, eingebettet werden. Die Lagen können aus einer AlMg- oder bevorzugt aus einer AlMgSc-Legierung gefertigt werden. Mit dieser Weiterentwicklung gelingt es beispielsweise, ein für die erste Bauteilkomponente eingesetztes Faser-Metall-Laminat (FML) umzuformen und mit dieser als Laminat ausgebildeten ersten Bauteilkomponente zugleich auch eine zweite Bauteilkomponente umzuformen und/oder zu verbinden, was wiederum für einen sehr effizienten Fertigungsvorgang sorgt.

In einer Ausgestaltung des erfindungsgemäßen ersten Verfahrens zur Herstellung eines Strukturbauteils und des erfindungsgemäßen ersten Strukturbauteils werden die erste Bauteilkomponente und die zweite Bauteilkomponente jeweils als eine Lage eines Laminats ausgebildet, wobei bei dem Bilden der Anordnung das thermoplastische Material zwischen den Lagen angeordnet wird und sich nach dem Anordnen vorzugsweise als Schicht zwischen den Lagen erstreckt. In die aus dem thermoplastischen Kunststoffmaterial gebildete Schicht können vorzugsweise Verstärkungsfasern, wie beispielsweise Glasfasern, Kohlefasern oder auch Zylonfasern, eingebettet werden, wobei das Einbetten der Verstärkungsfasern in das thermoplastische Kunststoffmaterial bereits vor dem Bilden der Anordnung oder erst beim Kriechumformen erfolgen kann.

Gemäß einer Weiterbildung des erfindungsgemäßen ersten Verfahrens zur Herstellung eines Strukturbauteils und in einer Ausgestaltung des erfindungsgemäßen ersten Strukturbauteils wird die zweite Bauteilkomponente als Verbundkomponente mit einer Matrix aus dem thermoplastischen Kunststoffmaterial ausgebildet. Hierbei werden vorzugsweise Verstärkungsfasern, insbesondere Glasfasern, Kohlefasern oder Zylonfasern, in die Matrix eingebettet. Dieses Einbetten erfolgt bevorzugt vor dem Bilden der Anordnung. Bei dem Kriechumformen schmilzt die Matrix der zweiten Bauteilkomponente für ein Verbinden mit der ersten Bauteilkomponente zumindest teilweise auf. Mittels dieser Weiterbildung des Verfahrens gelingt auch eine Herstellung eines Strukturbauteils, bei dem die zweite Bauteilkomponente aus einem faserverstärkten Kunststoff gefertigt ist. Vorteilhaft ist die zweite Bauteilkomponente derart gestaltet, dass kein zusätzliches thermoplastisches Kunststoffmaterial, beispielsweise in Form einer Folie oder als Beschichtung, für das Verbinden von erster und zweiter Bauteilkomponente bereitgestellt werden muss. Verbundkomponenten aus thermoplastischen Kunststoffmaterialien können mit komplizierten Geometrien hergestellt werden und ermöglichen die Fertigung von Strukturbauteilen mit vergleichsweise geringem Eigengewicht.

Bei einer Verbesserung der vorgenannten Ausgestaltung des erfindungsgemäßen ersten Verfahrens zur Herstellung eines Strukturbauteils wird eine Vorrichtung vorgesehen, welche gewährleistet, dass die als Verbundkomponente ausgebildete zweite Bauteilkomponente während des Kriechumformens bei der Temperatur ihre Querschnittsform im Wesentlichen beibehält. Auf diese Weise kann die Verbundkomponente mit der ersten Bauteilkomponente durch Aufschmelzen wenigstens eines Teils der Matrix verbunden werden, ohne dass sich die Verbundkomponente darüber hinaus in unerwünschter Weise verformt.

Bei einer alternativen Weiterbildung des erfindungsgemäßen ersten Verfahrens zur Herstellung eines Strukturbauteils und in einer Ausgestaltung des erfindungsgemäßen ersten Strukturbauteils wird die zweite Bauteilkomponente als Verbundkomponente mit einer Matrix aus einem zweiten thermoplastischen Kunststoffmaterial ausgebildet. Hierbei werden vorzugsweise Verstärkungsfasern, insbesondere Glasfasern, Kohlefasern oder Zylonfasern, in die Matrix eingebettet. Das zweite thermoplastische Kunststoffmaterial der Matrix erweicht bei dem Kriechumformen ohne aufzuschmelzen in der Weise, dass ein Umformen der zweiten Bauteilkomponente während des Kriechumformens ermöglicht wird. Bei dieser Weiterbildung kann die zweite Bauteilkomponente als Verbundkomponente gemeinsam mit der ersten Bauteilkomponente umgeformt werden, ohne dass die Matrix der zweiten Bauteilkomponente für ein Verbinden mit der ersten Bauteilkomponente aufgeschmolzen wird. Dadurch kann vorteilhaft gewährleistet werden, dass die Geometrie der zweiten Bauteilkomponente, insbesondere deren Querschnittsform, während des Kriechumformens nicht mehr als erwünscht verändert wird. Diese Ausgestaltung ermöglicht die Herstellung eines Strukturbauteils durch Umformen zweier Bauteilkomponenten, von welchen eine als Verbundkomponente ausgebildet ist, und gleichzeitiges Verbinden dieser Bauteilkomponenten, in einem einzigen Schritt. Dadurch wird eine noch effizientere Fertigung von Strukturbauteilen mit geringem Gewicht möglich.

In einer Weiterbildung des erfindungsgemäßen ersten Verfahrens zur Herstellung eines Strukturbauteils und in einer Weiterbildung des erfindungsgemäßen ersten Strukturbauteils wird die zweite Bauteilkomponente aus Stahl oder Titan ausgebildet. Zum Beispiel können Verstärkungselemente, Befestigungselemente, Beschläge oder dergleichen, welche während des Kriechumformens selbst aufgrund ihrer im Vergleich zu der ersten Bauteilkomponente relativ geringen Größe im Wesentlichen kein Umformen erfordern, während des Kriechumformens mit der ersten Bauteilkomponente verbunden werden. Dadurch ermöglicht das Verfahren eine noch zeitsparendere und kostengünstigere Herstellung und gleichzeitig eine zuverlässige Befestigung derartiger Komponenten.

In einer weiteren Ausgestaltung der erfindungsgemäßen Verfahren zur Herstellung eines Strukturbauteils und in einer weiteren Ausgestaltung der erfindungsgemäßen Strukturbauteile wird die zweite Bauteilkomponente als ein Doppler, insbesondere zur lokalen Verstärkung einer Schalenhaut, oder als ein Fensterrahmen ausgebildet. Der Doppler oder der Fensterrahmen können aus einer Aluminium-Magnesium-Legierung oder vorteilhaft aus einer Aluminium-Magnesium-Scandium-Legierung gefertigt sein. Derartige Doppler oder Fensterrahmen können auch vorteilhaft bei einer für das Aufschmelzen des thermoplastischen Kunststoffmaterials günstigen Temperatur ohne Zurückfedern zusammen mit der ersten Bauteilkomponente kriechumgeformt werden. Ferner können der Doppler oder der Fensterrahmen in einer Variante auch als Verbundkomponente mit einer Matrix aus einem thermoplastischen Kunststoffmaterial ausgeführt und in einer Ausgestaltung des erfindungsgemäßen zweiten Verfahrens zur Herstellung eines Strukturbauteils im gleichen Schritt wie die erste Bauteilkomponente umgeformt werden.

Gemäß einer bevorzugten Ausgestaltung der erfindungsgemäßen Verfahren zur Herstellung eines Strukturbauteils wird vor dem Kriechumformen zumindest eine dritte Bauteilkomponente, insbesondere ein Stringer, mit der ersten Bauteilkomponente mittels eines Schweißverfahrens, insbesondere mittels eines Laserstrahl-Schweißverfahrens, verbunden. Die auf diese Weise mit der ersten Bauteilkomponente, beispielsweise einer Schalenhaut, dauerhaft verbundene dritte Bauteilkomponente wird beim nachfolgenden Kriechumformen vorzugsweise ebenfalls in dem Maße umgeformt, wie es die angestrebte Geometrie des fertigen Strukturbauteils erfordert. Gemäß einer bevorzugten Ausgestaltung der erfindungsgemäßen Strukturbauteile weist das Strukturbauteil zusätzlich zu der ersten und der zweiten Bauteilkomponente somit zumindest eine dritte Bauteilkomponente, insbesondere einen Stringer, auf, welche mit der ersten Bauteilkomponente, insbesondere mittels eines Laserstrahl-Schweißverfahrens, verschweißt ist. Die derart mit der ersten Bauteilkomponente, beispielsweise einer Schalenhaut, dauerhaft verbundene dritte Bauteilkomponente ist bevorzugt ebenfalls zwei- oder dreidimensional gekrümmt ausgebildet. Wiederum wird insbesondere durch die Möglichkeit, die erste und zweite Bauteilkomponente verbinden und zugleich die erste, zweite und dritte Bauteilkomponente umformen zu können, ein zeitsparendes Fertigungsverfahren erreicht.

Bei einer vorteilhaften Verbesserung des erfindungsgemäßen Reparaturverfahrens kann der Doppler mehrere Lagen aufweisen, zwischen welchen jeweils eine mit dem thermoplastischem Material ausgebildete Zwischenschicht angeordnet ist. In einer entsprechenden Ausgestaltung des erfindungsgemäßen Halbzeugs für die Reparatur eines Strukturbauteils kann dieses mehrere Lagen aufweisen, wobei zwischen jeweils zwei Lagen eine mit dem thermoplastischem Kunststoffmaterial ausgebildete Zwischenschicht vorgesehen ist. Der Doppler kann aus diesem Halbzeug zugeschnitten werden. Die Lagen des Halbzeugs für den Doppler können mittels des thermoplastischen Kunststoffmaterials miteinander verbunden sein.

Bei einer Ausgestaltung des erfindungsgemäßen Reparaturverfahrens erfolgt während des Erwärmens ein Kriechumformen des Dopplers, um dem Doppler eine an das Strukturbauteil angepasste Geometrie zu verleihen. Dadurch gelingt es, die Lage des Dopplers flächig mit dem Strukturbauteil zu verbinden. Hierbei folgt die verbundene Lage nach dem Kriechumformen bevorzugt im Wesentlichen der Oberflächenform des Strukturbauteils. Auf diese Weise kann die unbeschädigte Oberflächenform des Strukturbauteils zumindest annähernd wieder hergestellt werden.

Gemäß einer Weiterbildung des erfindungsgemäßen Reparaturverfahrens werden der Doppler und vorzugsweise auch ein Abschnitt des Strukturbauteils einschließlich der Schadstelle mittels einer mobilen Heizeinrichtung auf die Temperatur erwärmt. Ein derartiges Reparaturverfahren kann mit Vorteil auch außerhalb einer Werkstatt durchgeführt werden.

In einer Ausgestaltung des erfindungsgemäßen Reparaturverfahrens handelt es sich bei dem zu reparierenden Strukturbauteil um eine Rumpfschale oder eine Flügelschale eines Luft- oder Raumfahrzeugs.

Das erfindungsgemäße Reparaturverfahren kann in einer vorteilhaften Ausgestaltung an einem Flugzeug durchgeführt werden, beispielsweise während turnusmäßig vorgesehener Wartungszeiten. Insbesondere kleinere Beschädigungen zum Beispiel der Flugzeugaußenhaut können mittels des erfindungsgemäßen Verfahrens mit geringem Zeitaufwand repariert werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der Erfindung hinzufügen.

Die Erfindung wird im Folgenden anhand von Ausführungsbeispielen unter Bezugnahme auf die beiliegenden schematischen Figuren der Zeichnung näher erläutert.

Von den Figuren zeigen:
- Fig. 1A,B: ein Flugzeug in einer Vorderansicht und einer Draufsicht;
- Fig. 2A-C: die Herstellung eines Strukturbauteils oder eines Halbzeugs gemäß einem ersten Ausführungsbeispiel der Erfindung, in einer Schnittansicht;
- Fig. 3A-C: die Herstellung eines Strukturbauteils gemäß einem zweiten Ausführungsbeispiel der Erfindung, in einer Schnittansicht;
- Fig. 4: das Einlegen eines Films oder einer Folie aus einem thermoplastischen Kunststoffmaterial zwischen zwei Bauteilkomponenten oder zwei Lagen eines durch Kriechumformen umformbaren Materials, in einer Schnittansicht;
- Fig. 5: das Beschichten einer zweiten Bauteilkomponente oder einer zweiten Lage eines durch Kriechumformen umformbaren Materials mit einem thermoplastischen Kunststoffmaterial, in einer Schnittansicht;
- Fig. 5A: das Beschichten einer ersten Bauteilkomponente oder einer ersten Lage eines durch Kriechumformen umformbaren Materials mit einem thermoplastischen Kunststoffmaterial, in einer Schnittansicht;
- Fig. 5B: das Beschichten einer ersten und einer zweiten Bauteilkomponente oder einer ersten und einer zweiten Lage eines durch Kriechumformen umformbaren Materials mit einem thermoplastischen Kunststoffmaterial, in einer Schnittansicht;
- Fig. 6: das Einlegen eines Films oder einer Folie aus einem thermoplastischen Kunststoffmaterial zwischen ein Versteifungselement und eine Schalenhaut für ein Strukturbauteil und das Beschichten einer Oberfläche eines anderen Versteifungselements für die Schalenhaut mit einem thermoplastischen Kunststoffmaterial, in einer Schnittansicht;
- Fig. 6A: das Beschichten eines Oberflächenabschnitts einer Schalenhaut mit einem thermoplastischen Kunststoffmaterial gemäß einer Variante, sowie das Beschichten einer Oberfläche eines Versteifungselements und das Beschichten eines anderen Oberflächenabschnitts der Schalenhaut mit einem thermoplastischen Kunststoffmaterial gemäß einer weiteren Variante;
- Fig. 7A-C: die Herstellung eines Strukturbauteils gemäß einem dritten Ausführungsbeispiel der Erfindung, in einer Schnittansicht;
- Fig. 8A-C: die Herstellung eines Strukturbauteils gemäß einem vierten Ausführungsbeispiel der Erfindung, in einer Schnittansicht;
- Fig. 9A-C: die Herstellung eines Strukturbauteils gemäß einem fünften Ausführungsbeispiel der Erfindung, in einer Schnittansicht;
- Fig. 10A-C: die Herstellung eines Strukturbauteils gemäß einem sechsten Ausführungsbeispiel der Erfindung, in einer Schnittansicht;
- Fig. 11A-C: die Herstellung eines Strukturbauteils gemäß einem siebten Ausführungsbeispiel der Erfindung, in einer Schnittansicht;
- Fig. 12A-C: die Herstellung eines Strukturbauteils oder eines Halbzeugs gemäß einem achten Ausführungsbeispiel der Erfindung, in einer Schnittansicht;
- Fig. 13A-C: die Herstellung eines Strukturbauteils oder eines Halbzeugs gemäß einem neunten Ausführungsbeispiel der Erfindung, in einer Schnittansicht;
- Fig. 14A-C: die Herstellung eines Strukturbauteils gemäß einem zehnten Ausführungsbeispiel der Erfindung, in einer Schnittansicht;
- Fig. 15A-C: Schritte eines Verfahrens zur Herstellung eines Strukturbauteils gemäß einem elften Ausführungsbeispiel der Erfindung, in einer Schnittansicht;
- Fig. 15D: ein weiterer Schritt eines Verfahrens zur Herstellung eines Strukturbauteils gemäß dem elften Ausführungsbeispiel, welcher sich an die Schritte der Figuren 15A-C anschließt;
- Fig. 15E: ein weiterer Schritt eines Verfahrens zur Herstellung eines Strukturbauteils, der bei einer Variante des elften Ausführungsbeispiel an die Stelle des in Figur 15D gezeigten Schrittes tritt;
- Fig. 15F: eine Variante des in Figur 15C gezeigten Verfahrensschrittes;
- Fig. 16A-C: die Herstellung eines Strukturbauteils gemäß einem zwölften Ausführungsbeispiel der Erfindung, in einer Schnittansicht; und
- Fig. 17: das Reparieren eines Strukturbauteils mit mehreren Schadstellen mittels unterschiedlich ausgestalteter Doppler, in einer Schnittansicht.

In den Figuren bezeichnen dieselben Bezugszeichen gleiche oder funktionsgleiche Komponenten, soweit nichts Gegenteiliges angegeben ist.

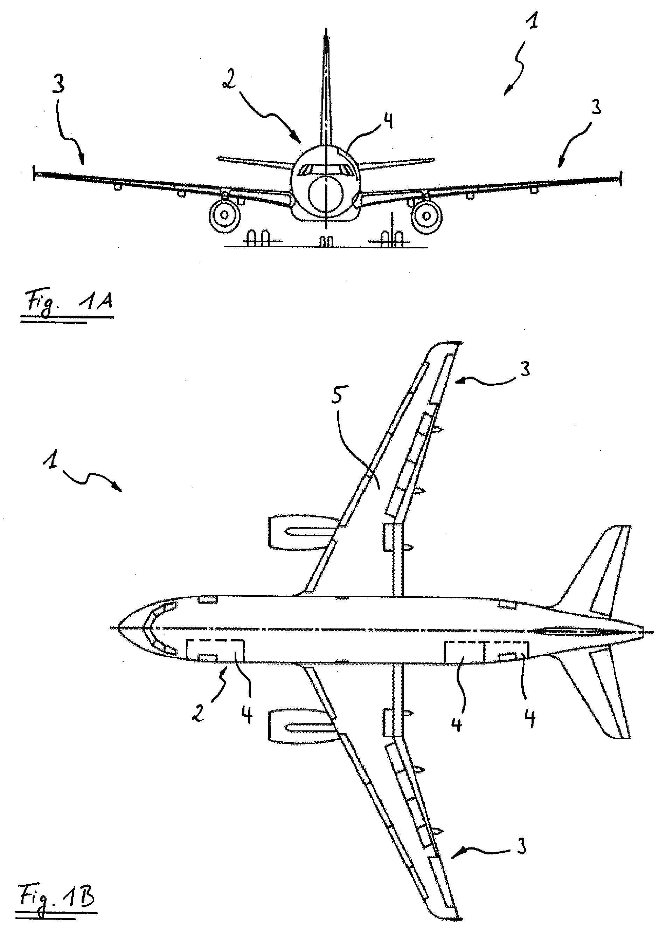

Die Figuren 1A und 1B zeigen ein Flugzeug 1, hier ein modernes Verkehrsflugzeug, in einer Vorderansicht und einer Draufsicht. Das Flugzeug 1 weist einen Rumpf 2 auf, an dem beidseits Flügel 3 angeordnet sind. Große Teile des Rumpfes 2 und der Flügel 3 sind aus Schalenbauteilen mit einer relativ dünnen Schalenhaut zusammengesetzt. Auf die Steifigkeit sowie die Beul- und Knickfestigkeit der Schalenhaut wird durch das Anbringen von Versteifungselementen, insbesondere von Stringern und Spanten, welche in Fig. 1A und 1B nicht sichtbar sind, auf Innenseiten der Schalenbauteile Einfluß genommen. Als Beispiel sind in Fig. 1B mehrere Rumpfschalen 4 und eine Flügelschale 5 angedeutet, wobei deren Größen und Formen insbesondere in Abhängigkeit der Herstellungsmöglichkeiten und des Flugzeugtyps variieren können und hier nur der Illustration halber beispielhaft gezeigt sind. Die Figuren 1A und 1B machen deutlich, dass Rumpfschalen 4 und Flügelschalen 5 nicht nur in einer Richtung, sondern in mehreren Richtungen im Raum gekrümmt sein können. Mit anderen Worten, die Schalenbauteile 4, 5 können nicht nur zylindrisch, sondern auch sphärisch gekrümmt sein.

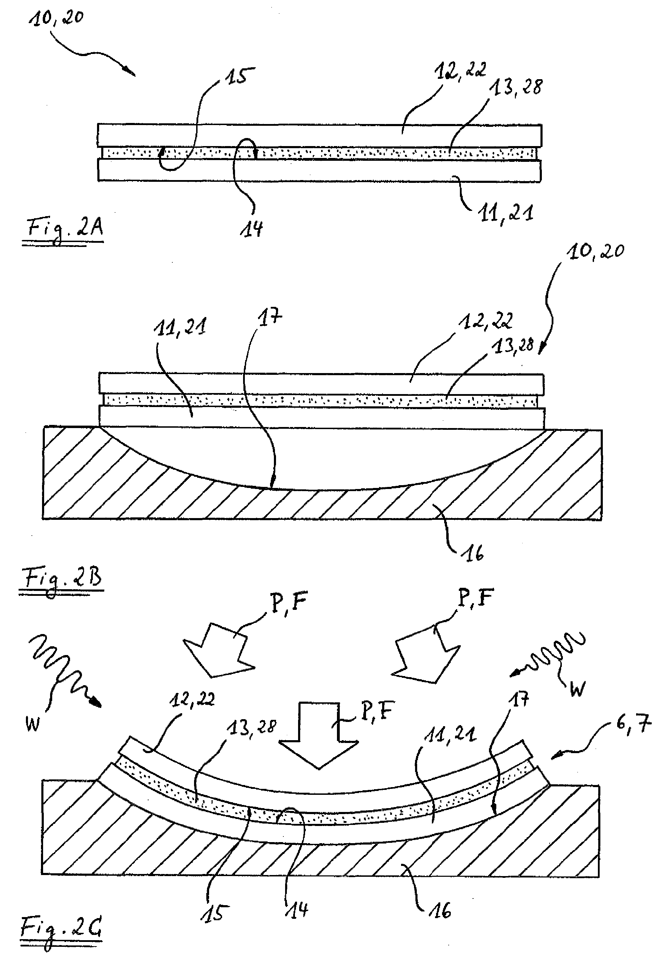

Die Figuren 2A bis 2C zeigen die Herstellung eines Strukturbauteils 6 und eines Halbzeugs 7 gemäß einem ersten Ausführungsbeispiel der Erfindung. Bei dem Strukturbauteil 6 kann es sich um eine Flügelschale 5 oder eine Rumpfschale 4 des Flugzeugs 1 handeln, jedoch auch um ein beliebiges anderes Strukturbauteil auf dem Gebiet der Luft- oder Raumfahrt oder auch auf anderen Gebieten der Technik, zum Beispiel der Kraftfahrzeugtechnik oder der Gebäudetechnik.

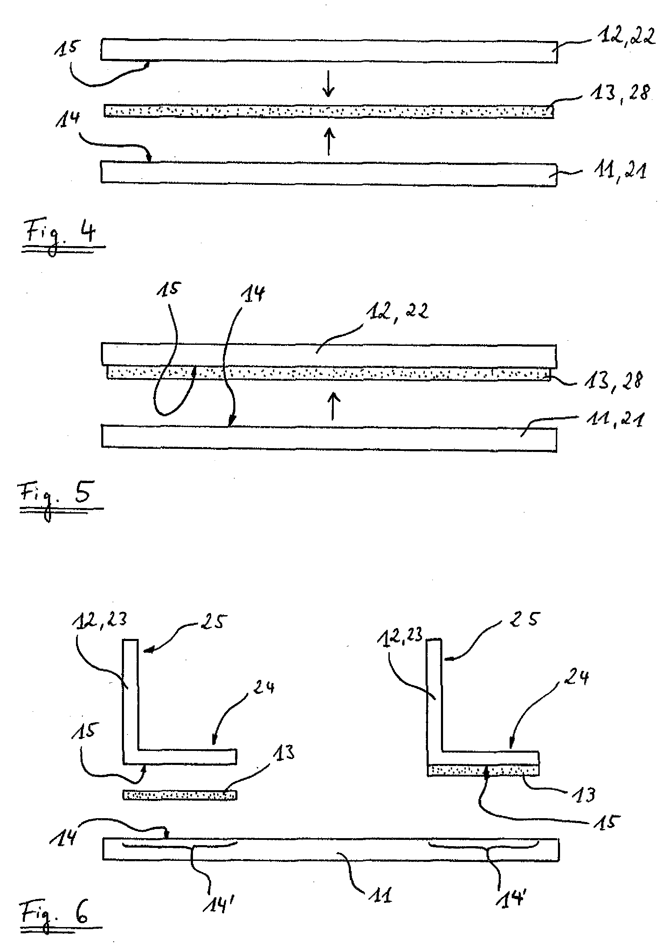

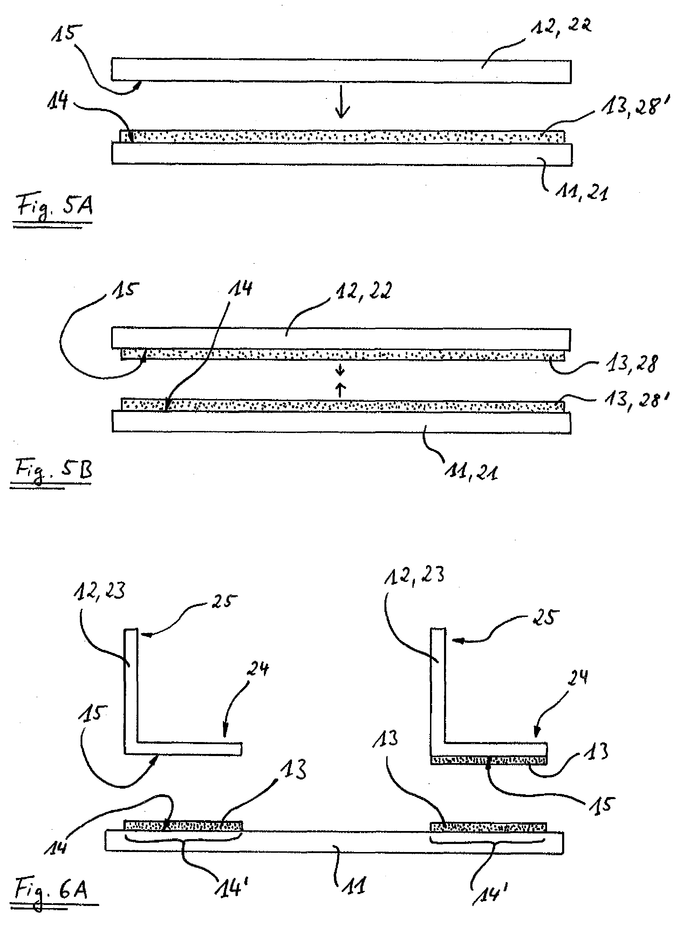

In Figur 2A ist eine Anordnung 10 dargestellt, die durch Anordnen einer zweiten Bauteilkomponente 12 auf einer ersten Bauteilkomponente 11 gebildet ist. Zwischen den beiden Bauteilkomponenten 11 und 12 ist eine Schicht 28 eines thermoplastischen Kunststoffmaterials 13 vorgesehen. Die Schicht 28 des thermoplastischen Kunststoffmaterials 13 ist in Figur 2A noch nicht mit beiden Bauteilkomponenten 11 und 12 verbunden, sondern kann, wie in Figur 4 illustriert, zum Bilden der Anordnung 10 in Gestalt eines Films oder einer Folie zwischen die erste Bauteilkomponente 11 und die zweite Bauteilkomponente 12 eingelegt werden. Alternativ hierzu kann das thermoplastische Kunststoffmaterial 13 auch als Beschichtung auf eine der Bauteilkomponenten 11, 12, beispielsweise auf eine untere Oberfläche 15 der zweiten Bauteilkomponente 12, wie in Figur 5 gezeigt, oder auf eine obere Oberfläche 14 der ersten Bauteilkomponente 11, wie in Figur 5A illustriert, aufgetragen sein, zum Beispiel durch thermisches Spritzen. Das thermoplastische Kunststoffmaterial 13 kann auch auf die einander zugewandten Oberflächen 14 und 15 beider Bauteilkomponenten 11, 12 als Beschichtung aufgetragen werden, wie in Figur 5B skizziert. Pfeile in den Figuren 4 sowie 5, 5A und 5B deuten an, wie nach dem Einlegen oder Beschichten die ersten und zweiten Bauteilkomponenten 11, 12 zum Bilden der Anordnung 10 aufeinandergesetzt werden.

Damit das thermoplastische Kunststoffmaterial 13 an der oberen Oberfläche 14 der ersten Bauteilkomponente 11 und an der unteren Oberfläche 15 der zweiten Bauteilkomponente 12 gut anhaftet, werden die Oberflächen 14 und 15 entweder vor dem Einlegen des Films zwischen die Bauteilkomponenten 11, 12 oder vor dem Beschichten einer der Bauteilkomponenten 11, 12 oder beider mit dem thermoplastischen Kunststoffmaterial 13 vorbehandelt, je nachdem, welche Variante gewählt wird. Die Vorbehandlung umfasst bei diesem Ausführungsbeispiel ein Reinigen und Entfetten der beiden Oberflächen 14 und 15 und anschließend ein Anodisieren (auch Eloxieren genannt) beider Oberflächen 14, 15. Daraufhin wird bevorzugt zusätzlich eine Grundierung (ein sogenannter Primer) auf die Oberflächen 14 und 15 aufgetragen. Während das Anodisieren bevorzugt wird, ist es auch vorstellbar, stattdessen die Oberflächen 14 und 15 jeweils vor dem Grundieren mit einem Umwandlungsüberzug oder mit einer Sol-Gel-Schicht zu versehen.

Nach dem Bilden der Anordnung 10 wird diese auf eine Form 16 aufgelegt, um die Anordnung 10 durch Aufbringen einer Kraft F und/oder eines Drucks P auf die Anordnung 10 mechanisch zu verformen. Eine Oberfläche 17 der Form 16 weist eine Oberflächengeometrie auf, die einer angestrebten Zielgeometrie des herzustellenden Strukturbauteils 6 in dessen fertigem Zustand im Wesentlichen entspricht. Wie Figur 2C zeigt, wird die Anordnung 10 durch die Kraft F und/oder den Druck P zunächst gegen die Oberfläche 17 gedrückt und dabei verformt. Die Kraft F und/oder der flächig einwirkende Druck P können in an sich bekannter Weise mittels eines Vakuumsacks, eines beweglichen Gegenstücks für die Form 16 oder in ähnlicher Weise aufgebracht werden. Um eine bleibende Verformung durch Kriechen des Materials der ersten und zweiten Bauteilkomponenten 11, 12 zu erzielen, wird die Anordnung 10 durch Zuführen von Wärme W auf Temperaturen bevorzugt im Bereich zwischen 275°C und 375°C, beispielsweise 325°C, erwärmt und diese Temperatur wird während einer vorgegebenen Zeitdauer, vorzugsweise zehn Minuten oder länger, beispielsweise etwa zwei Stunden, aufrechterhalten. Ein derartiges Umformen mittels einer Form 16 unter gleichzeitiger Einwirkung von mechanischer Kraft F oder flächig einwirkendem Druck P und Wärme W wird auch als Kriechumformen (in der englischsprachigen Terminologie "creep forming" genannt) bezeichnet. Danach kühlt die Anordnung 10 wieder ab und kann nach Wegnahme der Kräfte F und des Drucks P als fertiges Strukturbauteil 6 aus der Form 16 entnommen werden.

Bei dem gezeigten Ausführungsbeispiel sind die erste Bauteilkomponente 11 und die zweite Bauteilkomponente 12 aus einer Aluminium-Magnesium-Scandium-Legierung, mit ihrem Kurznamen auch als AlMgSc-Legierung bezeichnet, gefertigt. Das Zulegieren von Scandium trägt vorteilhaft dazu bei, dass die Bauteilkomponenten 11 und 12 je nach der Zusammensetzung der Legierung Temperaturen zum Beispiel im Bereich von 300°C bis 350°C ausgesetzt werden können, ohne dass die Legierung, aus welcher die Bauteilkomponenten 11 und 12 gefertigt sind, ihre günstigen mechanischen Eigenschaften verliert. Dies ist vorteilhaft, weil bei einem Erwärmen auf Temperaturen im Bereich von 275°C bis 375°C ein Relaxieren der durch die Einwirkung der mechanischen Kräfte F und/oder des Drucks P in den Bauteilkomponenten 11 und 12 hervorgerufenen mechanischen Spannungen eintritt. Dieses Relaxieren bewirkt, dass bei Wegnahme der Kräfte F und/oder des Drucks P kein Zurückfedern oder "Spring back" der Anordnung 10 eintritt. Die ersten und zweiten Bauteilkomponenten 11, 12 werden somit durch das Kriechumformen in die angestrebte Zielgeometrie des Strukturbauteils 6 gebracht, die Oberfläche 17 der Form 16 kann mit dieser Zielgeometrie ausgebildet werden, ohne dass ein "Spring back" zu berücksichtigen ist. Auf aufwendige Versuche oder Simulationen zur Ermittlung der Oberflächengeometrie der Form 16 kann somit verzichtet werden.

In dem genannten Temperaturbereich kann das thermoplastische Kunststoffmaterial 13, welches sich als Schicht zwischen den Bauteilkomponenten 11 und 12 erstreckt, teilweise oder, wenn gewünscht, auch vollständig schmelzen. Der aufgeschmolzene Anteil des thermoplastischen Kunststoffmaterials 13 kann sich an die Oberflächen 14 und 15 der Bauteilkomponenten 11, 12 anlegen. Durch Abkühlen erstarrt das thermoplastische Kunststoffmaterial 13 wieder und verbindet dadurch die erste Bauteilkomponente 11 und die zweite Bauteilkomponente 12 durch Haftung fest und dauerhaft miteinander, wodurch diese das Strukturbauteil 6 bilden. Die bereits beschriebene Vorbehandlung der Oberflächen 14, 15 verbessert das Anhaften des thermoplastischen Kunststoffmaterials auf diesen Oberflächen und damit die Verbindung der Bauteilkomponenten 11, 12.

Somit wird in ein und demselben Arbeitsgang ein dauerhaftes und zuverlässiges Verbinden und gleichzeitig ein Umformen der Bauteilkomponenten 11 und 12 in ihre angestrebte Endform erreicht. Nach dem Abkühlen kann das fertige Strukturbauteil 6 aus der Form 16 entnommen werden. Ein getrenntes Umformen der ersten und zweiten Bauteilkomponenten 11, 12 und ein nachfolgendes Befestigen dieser aneinander in einem weiteren separaten Arbeitsgang entfällt.

Zur Verbesserung der mechanischen Eigenschaften des fertigen Strukturbauteils 6 können in den Figuren nicht dargestellte Verstärkungsfasern in das thermoplastische Kunststoffmaterial 13 eingebettet werden. Als Fasern können beispielsweise Glasfasern, Kohlefasern, Zylonfasern oder Kombinationen dieser gewählt werden. Die Verstärkungsfasern können auch in mehreren Schichten paralleler Fasern mit unterschiedlichen Verlaufsrichtungen angeordnet sein und insbesondere bereits vor dem Kriechumformen in dem thermoplastischen Kunststoffmaterial 13 eingebettet sein, zum Beispiel in dem zwischen die Bauteilkomponenten 11, 12 eingelegten Film gemäß Figur 4 oder in der Beschichtung gemäß einer der Figuren 5, 5A oder 5B.

Die Figuren 2A bis 2C illustrieren auch die Herstellung eines Halbzeugs 7, welches für die Herstellung eines Strukturbauteils für die Luft- oder Raumfahrt durch Kriechumformen des Halbzeugs 7 Anwendung finden kann. Die ersten und zweiten Bauteilkomponenten 11 und 12 bilden eine erste Lage 21 und eine zweite Lage 22 eines Stapels 20. Die Lagen 21, 22 sind beide als Folien oder dünne Bleche aus einer AlMgSc-Legierung hergestellt, die Stärke der Lagen kann beispielsweise 0,2 mm bis 6,0 mm, bevorzugt 0,8 mm bis 3,8 mm, und weiter bevorzugt 0,8 mm bis 2,0 mm betragen. Zwischen den übereinander gelegten Lagen 21, 22 ist das thermoplastische Kunststoffmaterial 13 als Schicht 28 angeordnet, entweder als dazwischen eingelegter Film oder als Beschichtung einer der Lagen 21, 22, wie zu den Figuren 5, 5A und 5B erläutert. Durch Zufuhr von Wärme W wird der Stapel 20 erwärmt, wodurch das thermoplastische Kunststoffmaterial 13 teilweise oder vollständig aufschmilzt und die beiden Lagen 21 und 22 verbindet. Dabei können die Lagen 21, 22, wie in Figur 2C gezeigt, bereits durch Kriechumformen in eine gekrümmte Form gebracht werden. Alternativ hierzu kann die Oberfläche 17 zur Herstellung des Halbzeugs 7 auch eben sein, wobei dann ein ebenes, flächiges Halbzeug 7 hergestellt wird, welches in einem weiteren Verarbeitungsschritt auch erneut bis zum Erweichen oder Aufschmelzen des thermoplastischen Kunststoffmaterials 13 erwärmt und kriechumgeformt werden kann. Auch bei der Herstellung des Halbzeugs 7 können Verstärkungsfasern in das thermoplastische Kunststoffmaterial 13 eingebettet werden, wie für das Strukturbauteil 6 der Fig. 2C beschrieben. Die Verstärkungsfasern können im Wesentlichen parallel entlang einer Richtung verlaufen, oder es können in an sich bekannter Weise mehrere Schichten von Verstärkungsfasern vorgesehen werden, in welchen die Fasern sich entlang unterschiedlicher, zueinander um vorbestimmte Winkel versetzt verlaufender Richtungen erstrecken. Dies ermöglicht die Herstellung eines als Faser-Metall-Laminat (FML) ausgebildeten Halbzeugs 7. Die Oberflächen 14 und 15 der Lagen 21, 22 werden auch bei dem Halbzeug 7 vor dem Bilden des Stapels 20 in gleicher Weise vorbehandelt, wie vorstehend zu dem Strukturbauteil 6 des ersten Ausführungsbeispiels dargelegt.

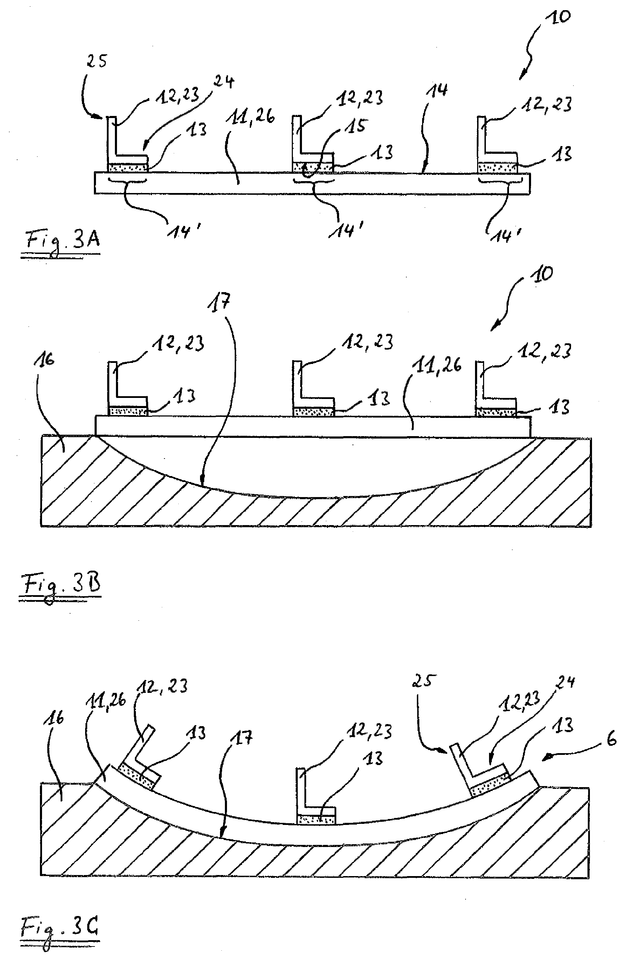

Die Herstellung eines als Rumpfschale 4 ausgebildeten Strukturbauteils 6 gemäß einem zweiten Ausführungsbeispiel der Erfindung zeigen die Figuren 3A bis 3C. Während eine erste Bauteilkomponente 11 vorgesehen ist, welche als eine dünnwandige Schalenhaut 26 für die Rumpfschale 4 ausgebildet ist, werden als zweite Bauteilkomponenten 12 mehrere Versteifungselemente bereitgestellt, die als Stringer 23 zur Versteifung der Schalenhaut 26 ausgebildet sind und bei dem gezeigten Beispiel etwa senkrecht zur Zeichenebene verlaufen. Die ersten und die zweiten Bauteilkomponenten 11 und 12 bilden wiederum eine Anordnung 10. Die Stringer 23 der Figuren 3A bis 3C weisen ein L-Profil mit einem als Stringerfuß dienenden ersten Schenkel 24 und einem bei diesem Beispiel in etwa senkrecht zu dem ersten Schenkel 24 verlaufenden zweiten Schenkel 25 auf, wobei auch Stringer 23 mit einem anderen Profil, zum Beispiel mit einem Z-Profil oder mit einem Omega-Profil, verwendet werden können. Zwischen den Stringern 33 und der oberen Oberfläche 14 der Schalenhaut 26 ist wiederum jeweils eine Schicht eines thermoplastischen Kunststoffmaterials 13 vorgesehen.

Figur 6 zeigt zwei Möglichkeiten, das thermoplastische Kunststoffmaterial 13 für die Herstellung des Strukturbauteils 6 gemäß dem zweiten Ausführungsbeispiel bereitzustellen, entweder als Film oder Folie, welcher/welche zwischen den ersten Schenkel 24 und die Schalenhaut 26 eingelegt wird, oder als Beschichtung einer unteren Oberfläche 15 des ersten Schenkels 24 des Stringers 23, zum Beispiel durch thermisches Spritzen des thermoplastischen Kunststoffmaterials 13 auf die untere Oberfläche 15 des Stringerfußes. Wie in Figur 6A skizziert, kann auch ein Oberflächenabschnitt 14' der oberen Oberfläche 14 der Schalenhaut 26 zusätzlich oder alternativ zu der unteren Oberfläche 15 des ersten Schenkels 24 des Stringers 23 mit dem thermoplastischen Kunststoffmaterial 13 beschichtet werden. Um auch hier ein gutes Anhaften des thermoplastischen Kunststoffmaterials 13 an den ersten und zweiten Bauteilkomponenten 11 und 12, in den Figuren 6 und 6A an der Schalenhaut 26 und an dem Stringer 23, zu gewährleisten, werden die obere Oberfläche 14 oder zumindest die Oberflächenabschnitte 14' der oberen Oberfläche 14 der Schalenhaut 26 und die untere Oberfläche 15 des Stringers 23 in gleicher Weise vorbehandelt, wie vorstehend zu den Figuren 4, 5, 5A und 5B bereits beschrieben.

Bei der in den Figuren 3A bis 3C gezeigten Herstellung eines durch Stringer 23 versteiften Strukturbauteils 6 verlaufen die als Stringer 23 ausgebildeten zweiten Bauteilkomponenten 12 im Wesentlichen quer zu der Richtung, in der das Strukturbauteil 6 in seinem fertigen Zustand vornehmlich gekrümmt sein wird, und werden daher selbst nicht oder näherungsweise nicht verformt. Wie Figur 3C zeigt, werden sie aber bei dem Kriechumformen der Schalenhaut 26 mit dieser durch Aufschmelzen und Wiederverfestigen des thermoplastischen Kunststoffmaterials 13 zuverlässig verbunden. Auch bei dem zweiten Ausführungsbeispiel der Figuren 3A bis 3C können Verstärkungsfasern, wie Glasfasern, Kohlefasern oder Zylonfasern, in das thermoplastische Kunststoffmaterial 13 eingebettet werden. Die Stringer 23 und die Schalenhaut 26 des zweiten Ausführungsbeispiels sind bevorzugt aus einer AlMgSc-Legierung gefertigt. Für die erste Bauteilkomponente 11, welche die Schalenhaut 26 bildet, kommt insbesondere ein vor dem Kriechumformen ebenes Blech mit einer Stärke im Bereich von 0,8 mm bis 6,0 mm, bevorzugt 0,8 mm bis 3,8 mm und weiter bevorzugt 0,8 mm bis 2,0 mm in Betracht.

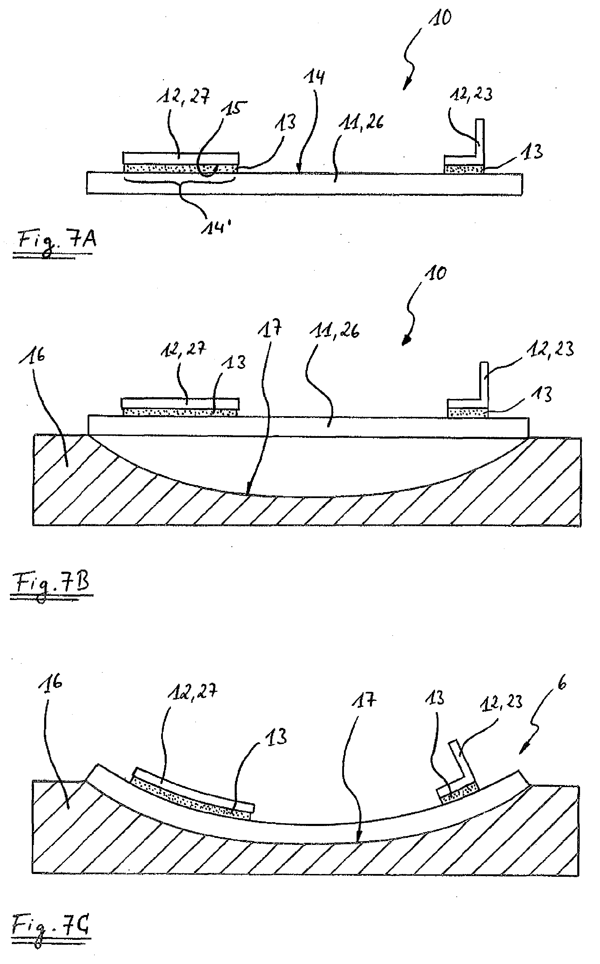

In den Figuren 7A bis 7C ist ein drittes Ausführungsbeispiel der Erfindung dargestellt. Gezeigt ist eine Anordnung 10 einer ersten Bauteilkomponente 11, die wiederum als Schalenhaut 26 für ein Strukturbauteil 6 ausgebildet ist. In ähnlicher Weise wie in Figur 3A umfasst die Anordnung 10 eine als Stringer 23 ausgebildete zweite Bauteilkomponente 12. Eine weitere zweite Bauteilkomponente 12 ist bei dem dritten Ausführungsbeispiel der Erfindung als ein Doppler 27 zur lokalen Verstärkung der Schalenhaut 26 ausgeführt. Zwischen dem Doppler 27 und der Schalenhaut 26 und zwischen dem Stringer 23 und der Schalenhaut 26 ist wiederum jeweils eine Schicht eines thermoplastischen Kunststoffmaterials 13 angeordnet. In Figur 7A sind der Doppler 27 und der Stringer 23 auf die Schalenhaut 26 vorerst lose aufgelegt. Sie können für das nachfolgende Kriechumformen und Verbinden durch Aufschmelzen des thermoplastischen Kunststoffmaterials 13 durch geeignete Mittel wie Stifte und dergleichen, die hier der Übersicht halber nicht gezeigt sind, zeitweise fixiert werden. Diese Mittel werden nach dem Abkühlen des fertigen Strukturbauteils 6 und dem Verfestigen des thermoplastischen Materials 13 wieder entfernt.

Wie die Figuren 7B und 7C zeigen, wird die Anordnung 10 des dritten Ausführungsbeispiels wie bei dem ersten Ausführungsbeispiel unter Erwärmung kriechumgeformt. Durch teilweises Aufschmelzen des thermoplastischen Kunststoffmaterials 13 und nachfolgendes Erstarren werden der Stringer 23 und der Doppler 27 mit der Schalenhaut 26 verbunden, wodurch das Strukturbauteil 6 gebildet ist. Während des Kriechumformens wird auch bei dem dritten Ausführungsbeispiel eine Temperatur zwischen 275°C und 375°C erreicht und für eine Dauer von mehr als zehn Minuten, beispielsweise zwei Stunden, gehalten. Auch der Doppler 27 und der Stringer 23 der Figuren 7A-C sind bevorzugt aus einer AlMgSc-Legierung ausgeführt.

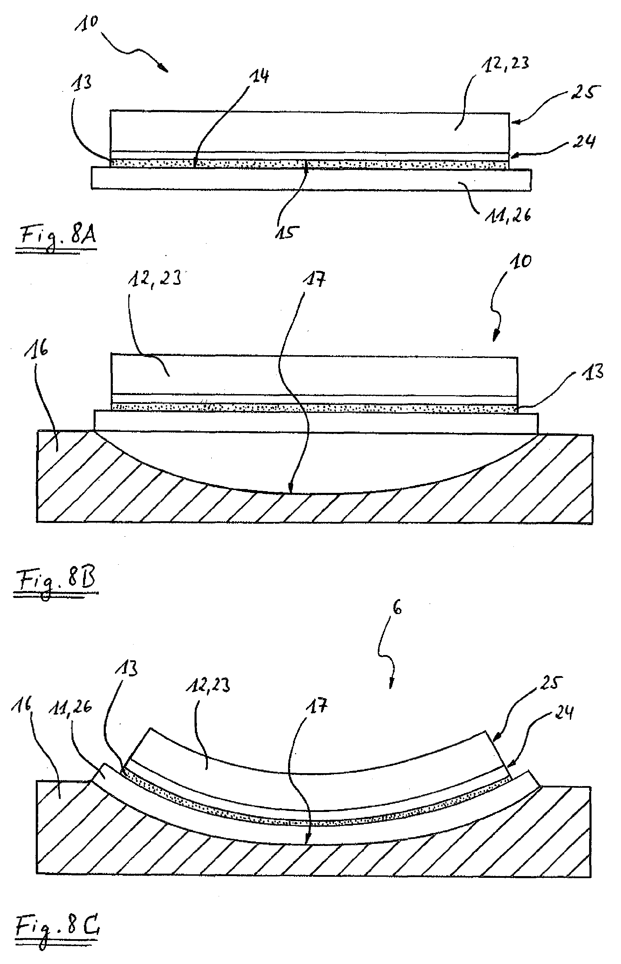

Bei einem vierten Ausführungsbeispiel der Erfindung gemäß den Figuren 8A bis 8C ist ein Stringer 23 als Versteifungselement für eine Schalenhaut 26 gezeigt, welcher nun im Wesentlichen entlang der angestrebten Hauptkrümmungsrichtung der Schalenhaut 26 verläuft. Der Stringer 23 ist bei diesem Beispiel wieder mit einem L-Querschnitt mit einem ersten Schenkel 24 und einem zweiten Schenkel 25 versehen. Bei dem Kriechumformen wird auch der Stringer 23 umgeformt und zugleich mit der Schalenhaut 26 durch eine Schicht eines thermoplastischen Kunststoffmaterials 13, wie zu den vorherigen Ausführungsbeispielen dargelegt, verbunden. Vorzugsweise sind hierbei der Stringer 23 und die Schalenhaut 26 wiederum aus einer AlMgSc-Legierung gefertigt. Es kann in diesem Fall zweckmäßig sein, für den Stringer 23 und die Schalenhaut 26 dieselbe AlMgSc-Legierung zu wählen, es können für diese Bauteilkomponenten aber auch unterschiedliche Legierungen dieser Legierungsfamilie vorgesehen werden.

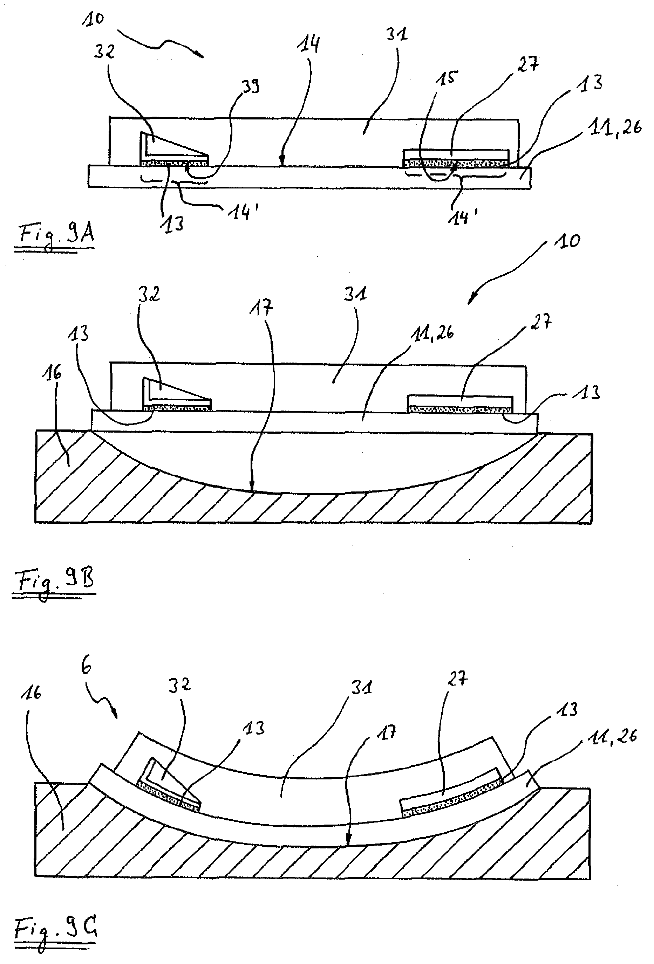

Gemäß einem fünften Ausführungsbeispiel der Erfindung, wie es in den Figuren 9A bis 9C illustriert ist, können vor dem Bilden einer Anordnung 10 zunächst eine oder mehrere dritte Bauteilkomponenten 31 mit einer ersten Bauteilkomponente 11 auf andere Weise als mittels eines thermoplastischen Kunststoffmaterials verbunden werden. Die erste Bauteilkomponente 11 der Figur 9A ist als ein im Wesentlichen ebenes Blech aus einer AlMgSc-Legierung ausgebildet, wobei die Dicke des Bleches beispielsweise zwischen 0,8 mm und 6,0 mm, bevorzugt 0,8 mm bis 3,8 mm, und weiter bevorzugt 0,8 mm bis 2,0 mm beträgt. Im fertigen Strukturbauteil 6 bildet die erste Bauteilkomponente 11 eine Schalenhaut 26. In Figur 9A ist nur eine dritte Bauteilkomponente 31 gezeigt und bei diesem Beispiel als ein Stringer ausgebildet, welcher mit seiner Längsrichtung im Wesentlichen parallel zur Zeichenebene verläuft. Der Stringer dient im Strukturbauteil 6 der Versteifung der Schalenhaut 26 und ist in Figur 9A bereits mit der ersten Bauteilkomponente 11 verschweißt. Das Verschweißen kann beispielsweise mittels eines Laserstrahlschweißverfahrens erfolgen. Bevorzugt ist auch die dritte Bauteilkomponente 31 aus einer AlMgSc-Legierung gefertigt. Ferner beinhaltet die Anordnung 10 gemäß dem Ausführungsbeispiel der Figur 9A-C zusätzlich zu den bereits verbundenen ersten und dritten Bauteilkomponenten 11, 31 zwei zweite Bauteilkomponenten 12, von welchen eine als ein in Fig. 9A beispielhaft skizziertes lokales Versteifungselement 32 und die andere als ein Doppler 27 zur lokalen Verstärkung der Schalenhaut 26 ausgebildet ist. Auch bei diesem Beispiel ist zwischen einer unteren Oberfläche 15 des Dopplers 27 und einer oberen Oberfläche 14 der ersten Bauteilkomponente 11 sowie zwischen dem lokalen Versteifungselement 32 und der oberen Oberfläche 14 der ersten Bauteilkomponente 11 eine Schicht eines thermoplastischen Kunststoffmaterials 13 angeordnet. Die Anordnung 10 der Figur 9A wird in Figur 9B auf einer Form 16 platziert und unter der Einwirkung von Druck und Wärme einer Kriechumformung unterzogen. Dabei werden die erste und dritte Bauteilkomponente 11 und 31, mit anderen Worten, die Schalenhaut 26 und der mit dieser verschweißte Stringer, umgeformt. Zugleich sind nach dem Kriechumformen das lokale Versteifungselement 32 und der Doppler 27 mit der Schalenhaut 26 fest verbunden. Das Strukturbauteil 6 kann nach dem Abkühlen als fertiges Bauteil aus der Form 16 entnommen werden. Das lokale Versteifungselement 32 kann auch als ein Rahmen für ein Fenster eines Luftfahrzeugs ausgebildet sein und bei der Kriechumformung mit umgeformt werden. Anstelle des lokalen Versteifungselements 32 könnte auch ein Befestigungselement, zum Beispiel ein hier nicht dargestellter Beschlag aus Titan oder aus Stahl, mittels der Schicht des thermoplastischen Kunststoffmaterials 13 mit der Schalenhaut 26 verbunden werden.

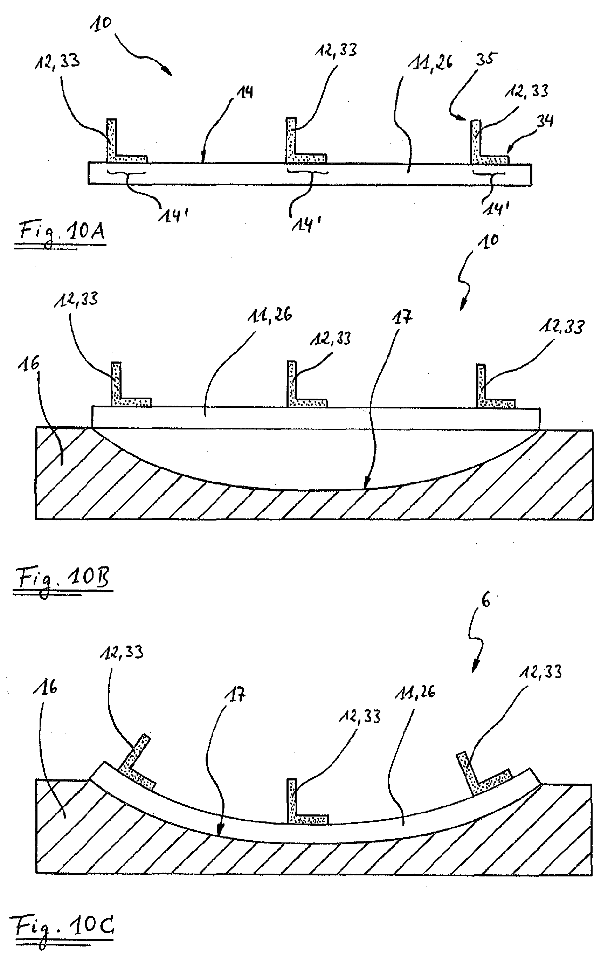

Gemäß einem sechsten Ausführungsbeispiel der Erfindung, welches in den Figuren 10A bis 10C gezeigt ist, wird die zweite Bauteilkomponente 12 als eine Verbundkomponente mit einer Matrix aus einem thermoplastischen Kunststoffmaterial ausgebildet. Vorzugsweise sind in die Matrix der zweiten Bauteilkomponente 12, die in den Figuren 10A bis 10C als Stringer 33 zur Versteifung einer Schalenhaut 26 dargestellt ist, Verstärkungsfasern eingebettet. Hierfür können insbesondere Glasfasern, Kohlefasern oder Zylonfasern oder eine Kombination dieser gewählt werden. Vorzugsweise werden die Stringer 33 als Verbundkomponenten bereits vor dem Anordnen auf der ersten Bauteilkomponente 11 durch Einbetten der Fasern in die thermoplastische Matrix hergestellt. Wie die Figuren 10B und 10C verdeutlichen, bilden die Stringer 33 zusammen mit der ersten Bauteilkomponente 11, die hier wiederum als ein vergleichsweise dünnes Blech aus einer AlMgSc-Legierung ausgebildet ist, beispielsweise mit einer Stärke in einem Bereich von 0,8 mm bis 3,8 mm, und die eine Schalenhaut 26 bilden soll, eine Anordnung 10. Die Stringer 33 sind auch bei diesem Beispiel mit einem L-förmigen Querschnitt ausgestattet, wobei ein erster Schenkel 34 beim Bilden der Anordnung 10 auf der ersten Bauteilkomponente 11 zur Auflage gelangt und ein zweiter Schenkel 35 von der ersten Bauteilkomponente 11 abragt. Wie bei den vorherigen Ausführungsbeispielen wird die Anordnung 10 einem Kriechumformen unterworfen. Dabei wird die erste Bauteilkomponente 11 umgeformt. Die Temperatur bei der Kriechumformung ist in der Weise gewählt, dass die thermoplastische Matrix der Stringer 33 für ein Verbinden mit der ersten Bauteilkomponente 11 zumindest teilweise aufschmilzt. Vorteilhaft wird ein vollständiges Schmelzen der Stringer 33 durch geeignete Wahl der Temperatur und deren zeitlichen Verlaufs vermieden. Um zu gewährleisten, dass die Stringer 33 ihre Querschnittsform bei der Kriechumformung im Wesentlichen beibehalten und dennoch zuverlässig mit der Schalenhaut 26 verbunden werden, können in den Figuren 10A bis 10C nicht gezeigte Vorrichtungen vorgesehen sein. Bevorzugt erfolgt auch bei diesem Ausführungsbeispiel eine Vorbehandlung von Oberflächenabschnitten 14' der oberen Oberfläche 14 der Schalenhaut 26 in der vorstehend bereits beschriebenen Weise, um das Anhaften des thermoplastischen Kunststoffmaterials an der Schalenhaut 26 zu verbessern.

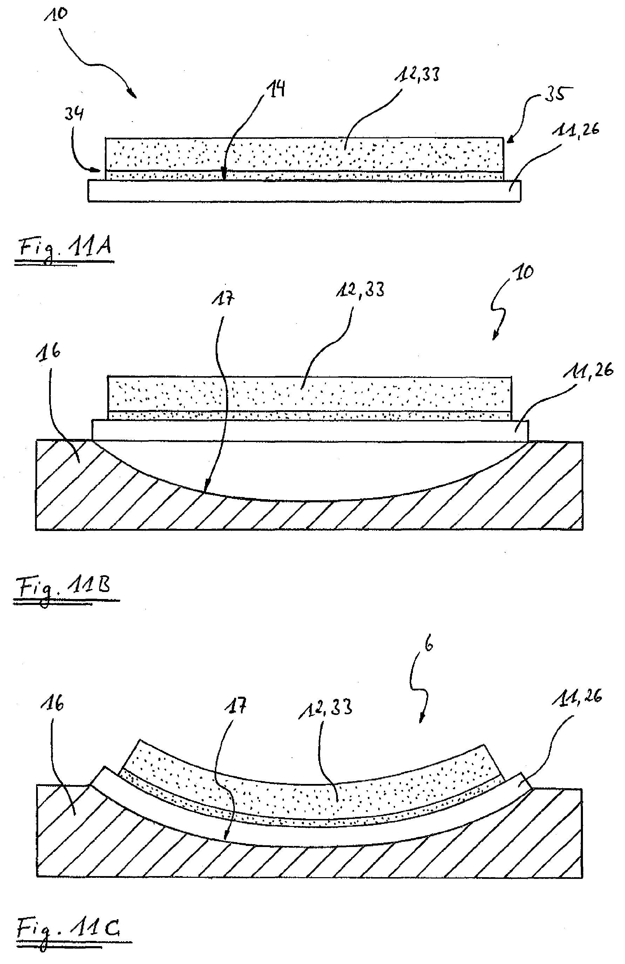

Das siebte Ausführungsbeispiel der Erfindung, wie es in den Figuren 11A bis 11B skizziert ist, unterscheidet sich von dem sechsten Ausführungsbeispiel der Fig. 10A-C lediglich durch die Ausrichtung der Längsrichtung der Stringer 33, von welchen in den Figuren 11A bis 11C nur einer sichtbar ist. Bei dem siebten Ausführungsbeispiel wird der Stringer 33 entlang der Hauptkrümmungsrichtung der Schalenhaut 26 beim Kriechumformen ebenfalls verformt und zugleich mit der Schalenhaut 26 verbunden.

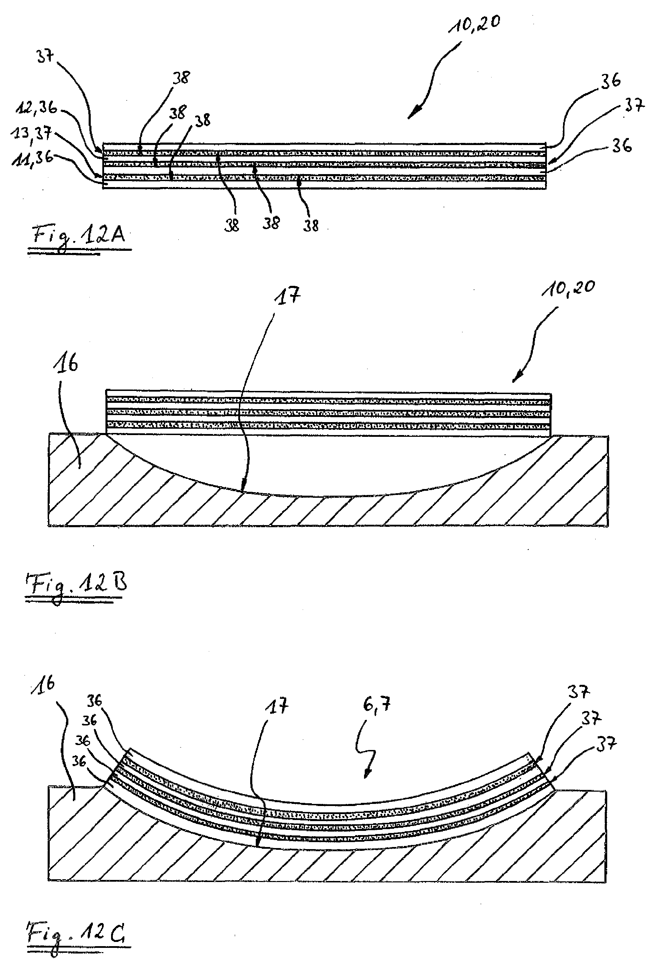

Gemäß dem achten Ausführungsbeispiel der Erfindung wird ein Strukturbauteil 6 oder ein Halbzeug 7 als ein Faser-Metall-Laminat (FML) mit mehreren Lagen 36 eines durch Kriechumformen umformbaren Materials und mehreren, jeweils zwischen zwei Lagen 36 angeordneten Schichten 37 eines thermoplastischen Kunststoffmaterials 13 hergestellt, wie in den Figuren 12A bis 12C illustriert. Bevorzugt sind die Lagen 36 als Folien oder dünne Bleche aus einer AlMgSc-Legierung ausgebildet und weisen vorzugsweise Dicken im Bereich von 0,2 mm bis 6,0 mm und bevorzugt im Bereich von 0,2 mm bis 1,0 mm auf. Die Lagen 36 und Schichten 37 werden übereinander angeordnet und bilden eine Anordnung 10, die auch als ein Stapel 20 bezeichnet werden kann. Bei diesem Ausführungsbeispiel kann eine der Lagen 36 als eine erste Bauteilkomponente 11, eine benachbarte Lage 36 als eine zweite Bauteilkomponente 12 und die anderen Lagen 36 als weitere Bauteilkomponenten angesehen werden. Zur Bildung eines Strukturbauteils 6 oder eines Halbzeugs 7 wird die Anordnung 10 bzw. der Stapel 20 in eine Form 16 gelegt und unter Einsatz von Kraft und/oder Druck sowie Wärme kriechumgeformt. Die Temperatur bei dem Kriechumformen ist in der Weise gewählt, dass die einzelnen Lagen 36 durch wenigstens teilweises Aufschmelzen des thermoplastischen Kunststoffmaterials 13 in den Schichten 37 miteinander verbunden werden, und liegt bevorzugt zwischen 275°C und 375°C. Auch bei dem achten Ausführungsbeispiel kann sich die bereits beschriebene Oberflächenvorbehandlung in Bezug auf die Oberflächen der Lagen 36 als zweckmäßig erweisen. Ferner kann die in den Figuren 12B und 12C gezeigte Oberfläche 17 der Form 16 auch eben sein, wodurch ohne Umformen ein ebenes Halbzeug 7 mit verbundenen Lagen 36 erzeugt werden kann. Dieses kann in einem weiteren Schritt auch nochmals durch Kriechumformen in der vorstehend beschriebenen Weise umgeformt werden. In das thermoplastische Kunststoffmaterial 13 einiger oder aller Schichten 37 können ebenfalls Verstärkungsfasern eingebettet sein, wie zu den Figuren 2A-C ausgeführt.

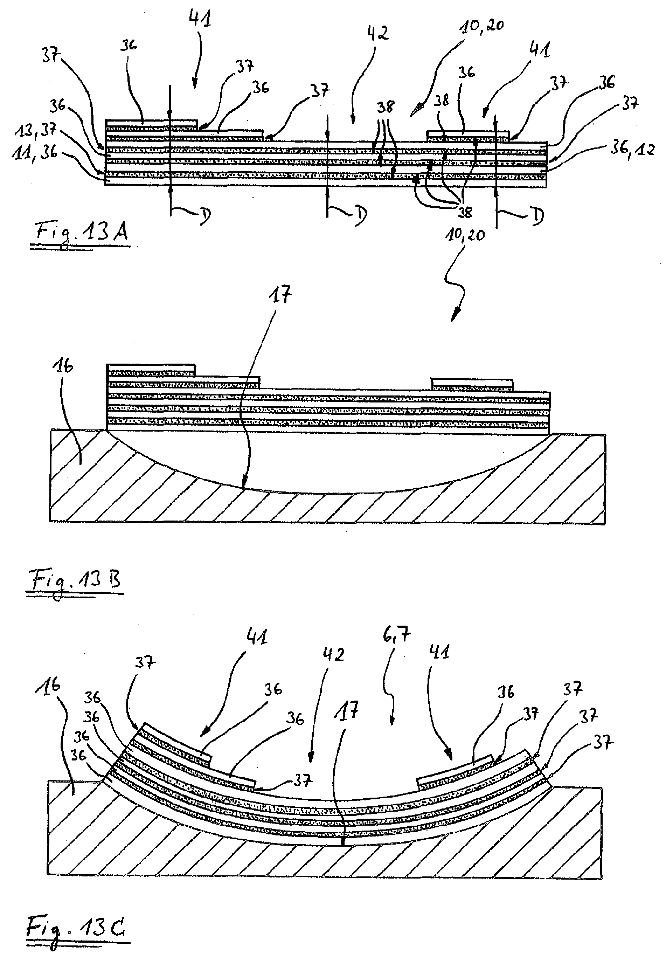

Wie das neunte Ausführungsbeispiel der Figuren 13A bis 13C zeigt, kann ein derartiges Strukturbauteil 6 oder Halbzeug 7 auch in der Weise hergestellt werden, dass es in verschiedenen Bereichen 41, 42 eine unterschiedliche Dicke D aufweist. Darüber hinausgehend unterscheidet sich das neunte Ausführungsbeispiel nicht von dem achten Ausführungsbeispiel. Dies kann dadurch erreicht werden, dass in einigen Bereichen 41 mehr, in anderen Bereichen 42 weniger Lagen 36 und entsprechend mehr oder weniger Schichten 37 des thermoplastischen Kunststoffmaterials 13 vorgesehen werden.

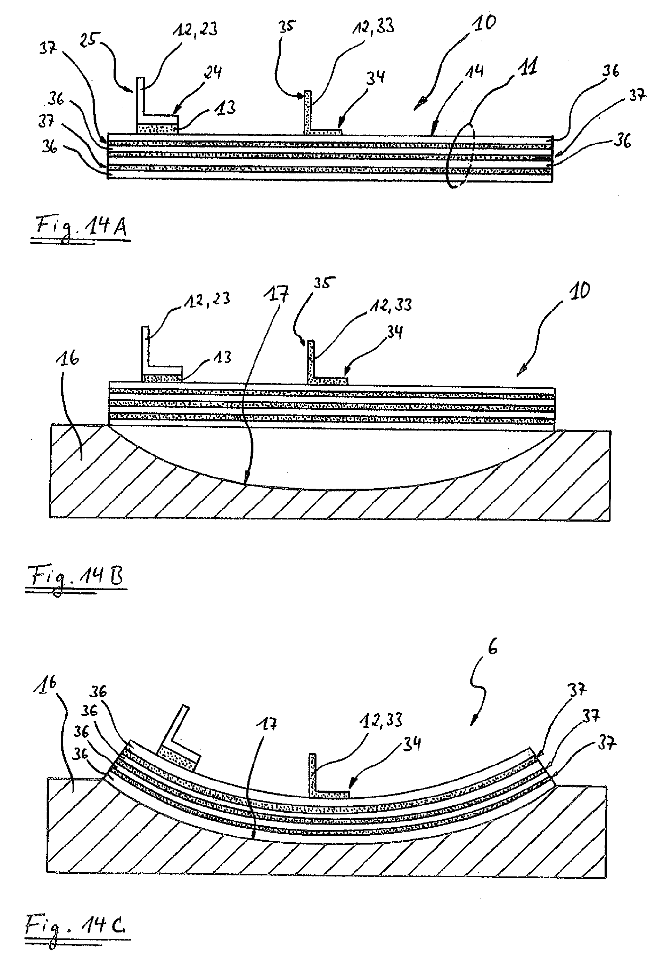

Bei dem zehnten Ausführungsbeispiel gemäß den Figuren 14A bis 14C wird zur Bildung eines Strukturbauteils 6 eine erste Bauteilkomponente 11 vorgesehen, welche aus einem Halbzeug 7, wie es vorstehend zu den Figuren 12A bis 12C oder 13A bis 13C beschrieben wurde, gefertigt ist. Zum Beispiel kann die erste Bauteilkomponente 11 der Figur 14A aus einem ebenen Halbzeug 7 mit mehreren Lagen 36 eines kriechumformbaren Materials wie einer AlMgSc-Legierung und Schichten 37 eines thermoplastischen Kunststoffmaterials 13 zugeschnitten werden. Mit weiteren, zweiten Bauteilkomponenten 12 bildet die erste Bauteilkomponente 11 in Figur 14A eine Anordnung 10. In Figur 14A sind beispielhaft ein Stringer 23 aus einer AlMgSc-Legierung und ein als Verbundkomponente ausgebildeter Stringer 33 gezeigt. Zwischen dem Stringer 23 und der ersten Bauteilkomponente 11 ist wie in Figur 3A eine Schicht eines thermoplastischen Kunststoffmaterials 13 angeordnet. Die Matrix des Stringers 33 ist ebenfalls aus einem thermoplastischen Kunststoffmaterial ausgebildet, wobei sich dieses von dem thermoplastischen Kunststoffmaterial 13 zwischen dem Stringer 23 und der ersten Bauteilkomponente 11 in der Zusammensetzung auch unterscheiden kann. Auch das thermoplastische Kunststoffmaterial in den Schichten 37 des Halbzeugs kann sich von den thermoplastischen Kunststoffmaterialien in der Matrix des Stringers 33 sowie zwischen dem Stringer 23 und der ersten Bauteilkomponente 11 unterscheiden. Zur Herstellung des Strukturbauteils 6 wird die Anordnung 10 unter der Einwirkung von Druck und Wärme kriechumgeformt, wobei das thermoplastische Kunststoffmaterial 13, die Matrix des Stringers 33 und die Schichten 37 teilweise aufschmelzen und beim Abkühlen und Erstarren das Verbinden aller Komponenten zur Bildung des Strukturbauteils 6, beispielsweise einer Rumpfschale 4, ermöglichen. Bei diesem zehnten Ausführungsbeispiel können die Lagen 36 des Halbzeugs, aus dem die erste Bauteilkomponente 11 hergestellt ist, bereits mittels der Schichten 37 verbunden sein. Die Lagen 36 können aber auch in dem Zustand der Figur 14A noch lose und unverbunden übereinander liegen, wobei das thermoplastische Kunststoffmaterial für die Schichten 37 wie zu den Figuren 4 und 5 beschrieben bereitgestellt werden kann.

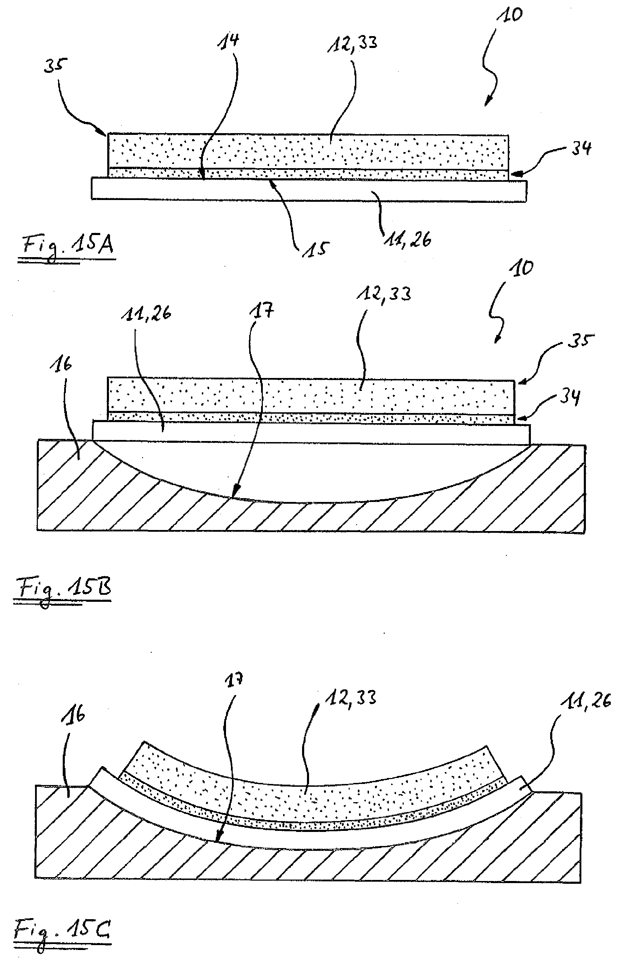

Ein elftes Ausführungsbeispiel eines erfindungsgemäßen Verfahrens zur Herstellung eines Strukturbauteils 6, insbesondere eines versteiften Schalenbauteils 4, 5 für ein Luftfahrzeug 1, soll anhand der Figuren 15A bis 15F erläutert werden. Auch bei diesem Ausführungsbeispiel werden eine als eine Schalenhaut 26 ausgebildete erste Bauteilkomponente 11 und eine als Stringer 33 ausgebildete zweite Bauteilkomponente 12 bereitgestellt. Der Stringer 33 wird als Verbundkomponente gefertigt, wobei in eine Matrix aus thermoplastischem Kunststoffmaterial Verstärkungsfasern, insbesondere Glasfasern, Kohlefasern oder Zylonfasern, eingebettet werden. Auch bei diesem Ausführungsbeispiel können die Fasern entlang mehrerer Richtungen bezüglich der Längsrichtung des Stringers 33 innerhalb der Matrix verlaufen, um die auf den Stringer 33 im fertigen Strukturbauteil 6 einwirkenden Lasten in vorteilhafter Weise aufzunehmen. Wie Figur 15A zeigt, wird der Stringer 33 auf der Schalenhaut 26 angeordnet, wodurch wiederum eine Anordnung 10 gebildet wird. Die Anordnung 10 wird auf eine Form 16 aufgesetzt, wobei die Oberfläche 17 der Form mit einer Geometrie versehen ist, die einer Oberflächengeometrie des herzustellenden Bauteils in dessen fertigem Zustand im Wesentlichen entspricht. Die Schalenhaut 26 ist aus einer AlMgSc-Legierung und mit einer Stärke im Bereich von 0,8 mm bis etwa 6 mm ausgeführt.

In dem in Figur 15C gezeigten Verfahrensschritt gemäß dem elften Ausführungsbeispiel der Erfindung wird die Anordnung 10 unter der Einwirkung von Wärme und Druck und/oder mechanischen Kräften verformt, bis die erste Bauteilkomponente 11 an der Oberfläche 17 der Form 16 anliegt. Dies erfolgt wiederum in einem Ofen oder Autoklaven bei einer Temperatur zwischen 275°C und 375°C, beispielsweise bei 320°C oder 350°C. Die Temperatur wird für einen vorbestimmten Zeitraum, bevorzugt mehr als zehn Minuten lang, aufrechterhalten. Hierbei kommt es zu einem Kriechen der Schalenhaut 26 aus Metall, wodurch diese kriechumgeformt wird. Wiederum bewirkt die Kombination von Umformtemperatur und Materialwahl, dass nach dem Umformvorgang im Wesentlichen kein "Spring back" auftritt.

Bei dem elften Ausführungsbeispiel werden ferner das thermoplastische Kunststoffmaterial der Matrix des Stringers 33 und die Temperatur, bei der das Kriechumformen erfolgt, in der Weise gewählt, dass die Matrix des Stringers 33 während des Umformens nicht aufgeschmolzen wird. Der Stringer 33 wird stattdessen bei diesem Ausführungsbeispiel der Erfindung durch maßvolles Erweichen verformbar und kann dabei gemeinsam mit der Schalenhaut 26 während des Kriechumformens dieser in die gewünschte Form gebracht werden (so genanntes "Thermoforming" des Stringers 33). Ein Verbinden der ersten und zweiten Bauteilkomponenten 11, 12 erfolgt bei dem elften Ausführungsbeispiel noch nicht während des Kriechumformens. Werden der Stringer 33 und die Schalenhaut 26 nach dem Erkalten und der Wegnahme von Druck und/oder aufgebrachter Umformkraft aus der Form 16 entnommen, dann haben die Schalenhaut 26 und der Stringer 33 die für das fertige Strukturbauteil 6 gewünschte Geometrie und sind darüber hinaus vorteilhaft durch das Umformen im selben Verfahrensschritt exakt aneinander angepasst. Die Schalenhaut 26 und der Stringer 33 verbleiben nach dem Entnehmen aus der Form 16 in ihrem zueinander passgenauen Zustand, da es zu keinem Zurückfedern oder "Spring back" der Schalenhaut 26 kommt.

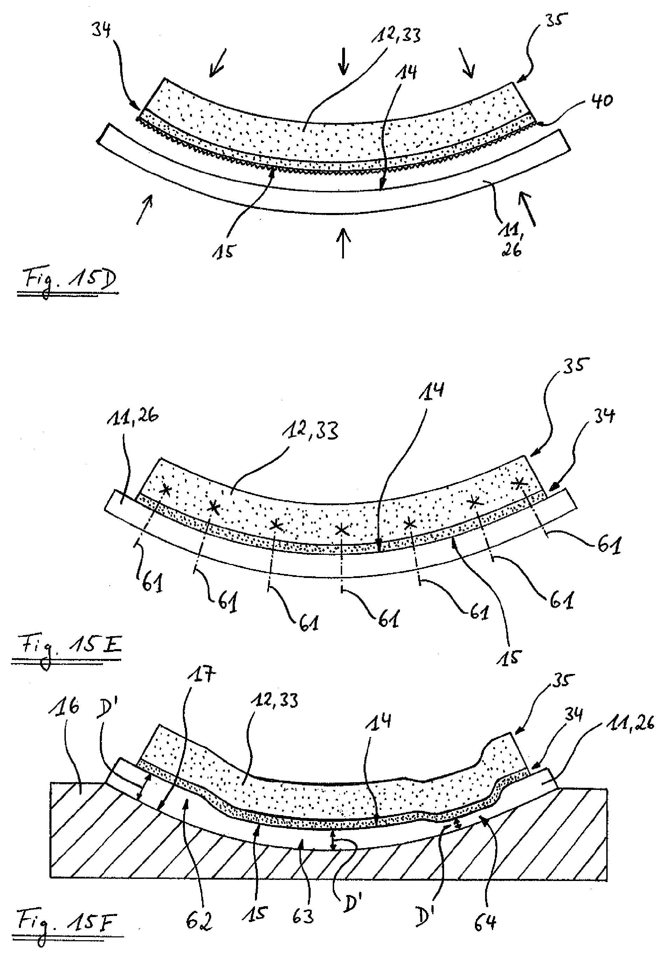

In einem anschließenden Schritt werden gemäß dem elften Ausführungsbeispiel die umgeformte Schalenhaut 26 und der Stringer 33 miteinander verbunden. Dies kann bei einer in Figur 15D skizzierten Variante durch Verkleben erfolgen, indem zum Beispiel eine Klebstoffschicht 40 auf eine untere Oberfläche 15 eines ersten Schenkels 34 des hier L-förmigen Stringers 33 aufgetragen wird. Dann können die beiden umgeformten Bauteilkomponenten 11, 12 in Pfeilrichtung zusammengesetzt werden. Nach dem Aushärten des Klebstoffes ist das Strukturbauteil fertig. In einer alternativen Variante, wie sie die Figur 15E zeigt, können die Schalenhaut 26 und der Stringer 33 nach dem Kriechumformen und dem Entnehmen aus der Form 16 miteinander mittels Nieten 61 verbunden werden.

Eine Variante des in Figur 15C skizzierten Schrittes des Verfahrens zeigt Figur 15F. Die Schalenhaut 26 kann an verschiedenen Stellen unterschiedlich dick ausgebildet sein, beispielsweise um ihr Gesamtgewicht zu verringern. In einem ersten Bereich 62 kann die Schalenhaut 26 ein vergleichsweise große Dicke D' aufweisen, während diese Dicke D' in benachbarten Bereichen 63 und 64 geringer sein kann. Während des Kriechumformens kann sich der Stringer 33, dessen Matrix bei der gewählten Temperatur erweicht, jedoch nicht aufschmilzt, mit Vorteil an die unterschiedlichen Dicken D' der Schalenhaut 26 anpassen. Nach dem Kriechumformen und Erkalten passen Stringer 33 und Schalenhaut 26 exakt zusammen und können passgenau aneinander befestigt werden, wiederum zum Beispiel durch Verkleben oder Vernieten. Ein aufwendiges und teures passgenaues Bearbeitung eines Stringers kann entfallen.

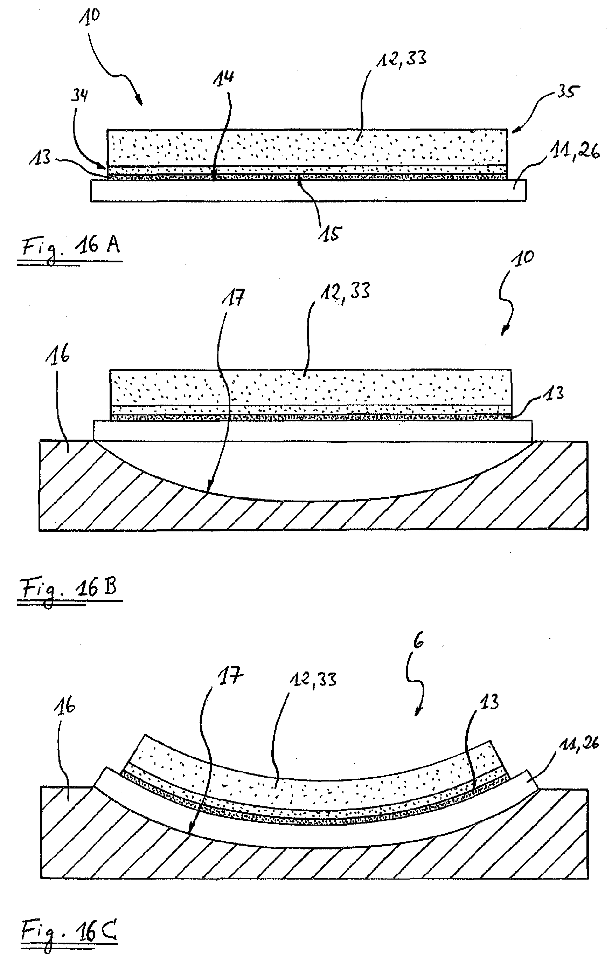

Das zwölfte Ausführungsbeispiel der Erfindung gemäß den Figuren 16A bis 16C stellt ein Abwandlung des vorstehend beschriebenen elften Ausführungsbeispiels dar. Hierbei wird beim Bilden einer Anordnung 10 zwischen einer ersten Bauteilkomponente 11 und einer zweiten Bauteilkomponente 12 eine Schicht 13 eines ersten thermoplastischen Kunststoffmaterials 13 angeordnet, durch Einlegen einer Folie oder durch Beschichten, wie zu den Figuren 4, 5, 5A, 5B, 6 und 6A bereits beschrieben. Insbesondere eine obere Oberfläche 14 der Schalenhaut 26, welche die erste Bauteilkomponente 11 bildet, wird hierbei durch Anodisieren oder Aufbringen eines Umwandlungsüberzugs oder einer Sol-Gel-Schicht vorbehandelt, wie ebenfalls bezüglich der Figuren 4, 5, 5A, 5B, 6 und 6A bereits beschrieben wurde. Während die Schalenhaut 26 wiederum aus einer AlMgSc-Legierung mit einer Stärke von 0,8 mm bis etwa 6 mm ausgeführt ist, ist der Stringer 33, welcher die zweite Bauteilkomponente 12 bildet, als eine Verbundkomponente ausgebildet, in deren Matrix Verstärkungsfasern, zum Beispiel Glasfasern, Kohlefasern oder Zylonfasern, eingebettet sind. Bei dem zwölften Ausführungsbeispiel ist die Matrix des Stringers 33 aus einem zweiten thermoplastischen Kunststoffmaterial ausgebildet, welches von dem ersten thermoplastischen Kunststoffmaterial 13 verschieden ist.

Die ersten und zweiten thermoplastischen Kunststoffmaterialien sind derart gewählt, dass, wenn die gebildete Anordnung 10 einem Kriechumformen unterworfen wird, das erste thermoplastische Kunststoffmaterial 13 zwischen den Bauteilkomponenten 11 und 12 bei der für das Kriechumformen gewählten Temperatur wenigstens teilweise aufschmilzt, um die Bauteilkomponenten 11, 12 miteinander dauerhaft zu verbinden. Gleichzeitig erweicht das zweite thermoplastische Kunststoffmaterial der Matrix der zweiten Bauteilkomponente 12 bei dem Kriechumformen, ohne aufzuschmelzen. Dadurch kann die zweite Bauteilkomponente 12 bei diesem Ausführungsbeispiel während des Kriechumformens ebenfalls umgeformt werden. Es kann somit in einem Verfahrensschritt ein "creep forming" der Schalenhaut 26, ein "thermoforming" des Stringers 33 und ein Verbinden beider durch Aufschmelzen und Wiedererstarren des zwischen beiden angeordneten thermoplastischen Kunststoffmaterials 13 erfolgen. Auch bei diesem Ausführungsbeispiel kann sich der Stringer 33, wie zu Figur 15F beschrieben, an Dickenunterschiede der Schalenhaut 26 anpassen. Die Temperatur für den Kriechumformvorgang wird wiederum zwischen 275°C und 375°C gewählt und vorzugsweise länger als zehn Minuten aufrechterhalten, beispielsweise im Bereich von etwa 30 Minuten bis eine Stunde.

Auch bei den Ausführungsbeispielen der Figuren 15A bis 15F und 16A bis 16C kann die als Schalenhaut 26 ausgebildete erste Bauteilkomponente 11, ähnlich wie in den Figuren 14A bis 14C, mehrlagig ausgebildet sein.

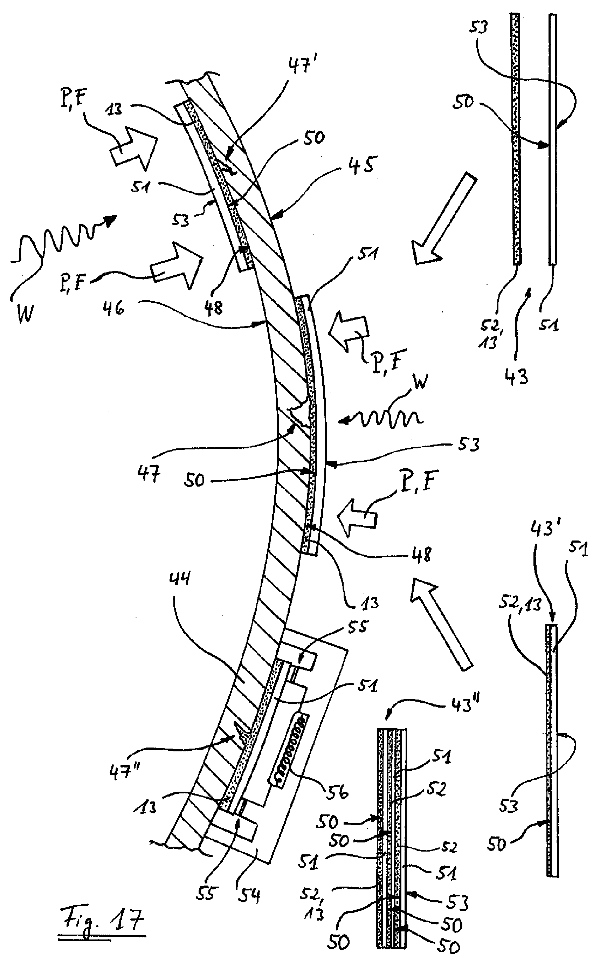

Die Durchführung eines Reparaturverfahrens gemäß einem weiteren Ausführungsbeispiel der vorliegenden Erfindung ist in der Figur 17 schematisch dargestellt. Ein Strukturbauteil 44, von dem in Figur 17 nur ein Abschnitt gezeigt ist, weist an einer Außenseite 45 eine Schadstelle 47 und eine Schadstelle 47'' auf. Ferner weist das Strukturbauteil 44 bei diesem Beispiel an einer Innenseite 46 eine weitere Schadstelle 47' auf. Bei dem Strukturbauteil 44 kann es sich um eine Rumpfschale 4 oder eine Flügelschale 5 eines Flugzeugs, aber auch um ein anderes Strukturbauteil eines Luft- oder Raumfahrzeugs, um ein Strukturbauteil eines Kraftfahrzeugs oder ein Strukturbauteil eines Gebäudes handeln. Das Strukturbauteil 44 gemäß Figur 17 ist mit einer gewölbten Schalenhaut ausgebildet und kann auf der Innenseite 46 mit nicht dargestellten Versteifungselementen wie Stringern, Spanten und dergleichen ausgesteift sein.

Um die Schadstelle 47, 47' oder 47'' zu reparieren, wird zunächst ein Doppler 43 oder alternativ hierzu ein Doppler 43' oder 43'' bereitgestellt. Der Doppler 43 ist bei dem in Figur 17 gezeigten Beispiel zweiteilig mit einer Lage 51 eines durch Kriechumformen umformbaren Materials und einer als Folie ausgebildeten Schicht 52 eines thermoplastischen Kunststoffmaterials 13. Die Folie aus dem thermoplastischen Kunststoffmaterial 13 kann eingebettete Verstärkungsfasern, wie Glasfasern, Kohlefasern oder Zylonfasern oder Kombinationen dieser aufweisen und für die Durchführung des Reparaturverfahrens bereits vorgefertigt und zum Beispiel in Standardgrößen zugeschnitten bereitgestellt werden. Alternativ kann die Folie vor Ort auf die Größe des beschädigten Bereichs individuell zugeschnitten werden. Auch die Lage 51 kann als Standardzuschnitt vorliegen oder individuell zugeschnitten werden. In dem gezeigten Ausführungsbeispiel ist die Lage 51 als Folie oder dünnes Blech aus einer AlMgSc-Legierung mit einer Stärke zwischen 0,2 mm und 6,0 mm, bevorzugt zwischen 0,4 mm und 3,8 mm gefertigt. Die Folie aus dem thermoplastischen Kunststoffmaterial 13 wird zum Reparieren zwischen das Strukturbauteil 44 und die Lage 51 eingelegt.

Der alternativ verwendbare Doppler 43' umfasst ebenfalls eine Lage 51, die wie bei dem Doppler 43 aus einer AlMgSc-Legierung ausgebildet ist. Eine Oberfläche 50 der Lage 51 ist flächig mit einem thermoplastischen Kunststoffmaterial 13 beschichtet. Dies kann durch thermisches Aufspritzen des thermoplastischen Kunststoffmaterials 13 zur Bildung einer Schicht 52 auf die Lage 51 erfolgen. Der Doppler 43' ist somit aus einem Halbzeug mit einer mit dem thermoplastischen Kunststoffmaterial 13 beschichteten Lage 51 in geeigneter Weise zugeschnitten. Vorteilhaft ist hierbei, dass der Doppler 43' einteilig ist und damit bei der Reparatur Vorteile in der Handhabung bietet. Eine weitere Variante eines Dopplers zur Reparatur der Schadstelle 47, 47' oder 47'' ist mit dem Bezugszeichen 43'' versehen. Der Doppler 43'' ist ebenfalls aus einem Halbzeug zugeschnitten, weist jedoch mehrere Lagen 51 aus einer AlMgSc-Legierung auf, wobei zwischen jeweils zwei Lagen 51 eine Schicht 52 aus einem thermoplastischen Kunststoffmaterial 13 vorgesehen ist. Auch bei dem Doppler 43'', wie bei dem Doppler 43', liegt eine Oberfläche 53 einer obersten Lage 51 frei, während auf einer gegenüberliegenden Unterseite des Dopplers 43'' eine Schicht 52 des thermoplastischen Kunststoffmaterials 13 freiliegt. Auch bei den einteiligen Dopplern 43' und 43'' können in das thermoplastische Kunststoffmaterial zur Verbesserung der mechanischen Eigenschaften des Dopplers 43', 43'' Verstärkungsfasern der vorstehend genannten Arten eingebettet werden.

Um die Schadstelle 47, 47' oder 47'' zu reparieren, wird ein Doppler 43, 43' oder 43'' derart auf das Strukturbauteil 44 aufgelegt, dass der Doppler 43, 43' oder 43'' die Schadstelle 47, 47' oder 47'' bevorzugt vollständig abdeckt. Dabei liegt die jeweilige zu dem Strukturbauteil 44 gewandte äußere Schicht 52 aus dem thermoplastischen Kunststoffmaterial 13 auf der Außenseite 45 bzw. der Innenseite 46 des Strukturbauteils 44 zumindest teilweise an.

Die Doppler 43, 43', 43'' und die Halbzeuge, aus denen die Doppler 43, 43', 43'' gefertigt sind, können als flächiges, ebenes Material vorproduziert werden. Strukturbauteile 44 von Luft- oder Raumfahrzeugen sind jedoch oft in mehreren Raumdimensionen gekrümmt. Dadurch liegt der Doppler 43, 43', 43'' zunächst meist nicht vollflächig auf dem Strukturbauteil 44 auf. Um eine vollständiges Anlegen zu erreichen, wird ein Druck P und/oder eine Kraft F auf den Doppler 43, 43', 43'' aufgebracht, zum Beispiel mittels einer geeigneten Spannvorrichtung. Nachfolgend wird der Doppler 43, 43', 43'' mittels einer geeigneten und bevorzugt mobilen Heizeinrichtung auf eine Temperatur erwärmt, bei der das thermoplastische Kunststoffmaterial wenigstens der auf dem Strukturbauteil 44 aufliegenden Schicht 52 zumindest teilweise aufschmilzt. Auch ein Abschnitt des Strukturbauteils 44 wird hierbei bevorzugt erwärmt. Die Temperatur kann beispielsweise zwischen 275°C und 375°C liegen und wird ein vorbestimmte Zeit, zum Beispiel mehr als zehn Minuten, aufrechterhalten. Dabei werden die Lagen 51 durch Kriechen des Materials umgeformt. Nachfolgend wird dafür gesorgt, dass das Strukturbauteil 44 und der Doppler 43, 43', 43'' wieder abkühlen können, wobei das aufgeschmolzene thermoplastische Kunststoffmaterial 13 wieder erstarrt und hierbei die Lage 51 und somit den gesamten Doppler 43, 43', 43'' mit dem Strukturbauteil 44 dauerhaft und zuverlässig verbindet. Vorteilhaft kann hierbei ein Teil des aufgeschmolzenen thermoplastischen Kunststoffmaterials 13 auch kleinere Schadstellen 47'', wie kleinere Ritzungen, Kerben und dergleichen, auffüllen. Das zu reparierende Strukturbauteil 44 besteht bei diesem Ausführungsbeispiel ebenfalls aus einer AlMgSc-Legierung, wodurch die mechanischen Eigenschaften des Strukturbauteils 44 bei dem Erwärmen nicht leiden. Eine mobile Spann- und Heizeinrichtung 54 mit Spannelementen 55 zum Aufbringen von Kräften F auf den Doppler 43, 43', 43'' und einem Heizelement 56 zum Einbringen von Wärme W ist in Figur 17 beim Einsatz zur Reparatur der Schadstelle 47'' an der Außenseite 45 des Strukturbauteils 44 schematisch gezeigt. Das unter Bezugnahme auf Figur 17 beschriebene Reparaturverfahren kann zum Beispiel bei der turnusmäßigen Wartung und Instandhaltung eines Flugzeugs 1 zur Reparatur kleinerer Beschädigungen der Außenhaut des Rumpfes 2 eingesetzt werden. Auch Schadstellen 47' an der Innenseite 46 können repariert werden.

Auch bei dem Reparaturverfahren der Figur 17 wird die Oberfläche des Strukturbauteils 44 abschnittsweise, zumindest in einem Bereich um die Schadstelle, in dem der Doppler aufgelegt wird, bevorzugt durch Reinigen und Entfetten sowie durch Anodisieren oder Aufbringen eines Umwandlungsüberzugs oder einer Sol-Gel-Schicht vorbehandelt, um das Haften des thermoplastischen Kunststoffmaterials zu verbessern. Gleiches gilt für die mit dem thermoplastischen Kunststoffmaterial in Berührung tretenden Oberflächen 50 der Lage 51 oder der mehreren Lagen 51.

Was die Vorbehandlung der Oberflächen der Bauteilkomponenten oder Lagen, die Wahl der Temperaturen, das Aufbringen der Kräfte F und des Druckes P und die Wahl der Form 16 angeht, so gilt für das zweite bis zwölfte Ausführungsbeispiel das bereits zu dem ersten Ausführungsbeispiel Gesagte, wobei bei dem elften Ausführungsbeispiel die Vorbehandlung entfallen kann, da während des Umformens kein Verbinden mittels des thermoplastischen Kunststoffmaterials erfolgt. Bei den ersten bis zwölften Ausführungsbeispielen kann das Aufbringen von Wärme in einem Ofen oder in einem Autoklaven, in den die Form 16 und die umzuformende Anordnung 10 bzw. der umzuformende Stapel 20 eingeführt wird, erfolgen.

Als thermoplastisches Kunststoffmaterial für einzulegende Filme oder Folien, für ein Beschichten und/oder für die Matrix einer Verbundkomponente kommt bei sämtlichen gezeigten Ausführungsbeispielen ein Hochleistungsthermoplast, insbesondere ein Polyaryletherketon (PAEK), ein Polyetheretherketon (PEEK), ein Polyetherketon (PEK), ein Polyetherimid (PEI) oder ein Polyamidimid (PAI), zum Einsatz. Auch die Verwendung anderer thermoplastischer Kunststoffe ist jedoch denkbar. Das thermoplastische Kunststoffmaterial ist in den Figuren zur besseren Übersicht mit einem gepunkteten Muster versehen. Die Filme oder Folien bzw. die Beschichtungen haben eine Dicke, die bevorzugt in einem Bereich von 0,05 mm bis 0,3 mm liegt.

Die vorstehende Beschreibung der Ausführungsbeispiele der Erfindung nimmt Bezug auf Figuren, in welchen die Form 16 jeweils im Schnitt dargestellt ist. Hierbei ist nur eine im Wesentlichen zylindrische, zweidimensionale Krümmung der formenden Oberfläche 17 der Form 16 erkennbar. Dennoch versteht es sich, dass die Form 16 mit einer beliebig und auch in mehreren Raumrichtungen gekrümmten formenden Oberfläche 17 ausgestattet sein kann. Das erzeugte Strukturbauteil 6 sowie das erzeugte Halbzeug 7 können somit ebenfalls auch in mehreren Raumrichtungen gekrümmt sein, mithin beliebige dreidimensional geformte Oberflächen aufweisen, wie sie insbesondere bei Schalenbauteilen für moderne Luftfahrzeuge vorkommen.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Beispielsweise kann die vorliegende Erfindung nicht nur auf dem Gebiet der Luft- und Raumfahrt, sondern auch in der Fahrzeugtechnik oder der Gebäudetechnik Anwendung finden, zum Beispiel bei der Fertigung von Karosserieteilen oder Gebäudebauteilen.

Die vorliegende Erfindung schafft ein Verfahren zur Herstellung eines Strukturbauteils mit zumindest zwei miteinander mittels eines thermoplastischen Kunststoffmaterials verbundenen Bauteilkomponenten und kann insbesondere auf dem Gebiet der Luft- oder Raumfahrt Anwendung finden. In einem ersten Verfahrensschritt werden eine erste Bauteilkomponente und eine zweite Bauteilkomponente bereitgestellt und zum Bilden einer Anordnung angeordnet. In einem weiteren Schritt erfolgt ein Kriechumformen der Anordnung bei einer Temperatur, welche in der Weise gewählt wird, dass das thermoplastische Kunststoffmaterial während des Kriechumformens zumindest teilweise aufschmilzt, um die erste Bauteilkomponente und die zweite Bauteilkomponente zu verbinden. Darüber hinaus werden durch die Erfindung ein weiteres Verfahren zur Herstellung eines Strukturbauteils, ein Verfahren zur Herstellung eines Halbzeugs für die Fertigung eines Strukturbauteils durch Kriechumformen des Halbzeugs sowie ein Reparaturverfahren für ein Strukturbauteil mit einer Schadstelle bereitgestellt. Ferner bezieht sich die Erfindung auf Strukturbauteile, insbesondere für ein Luft- oder Raumfahrzeug, auf ein Luft- oder Raumfahrzeug mit einem derartigen Strukturbauteil, auf ein Halbzeug für die Herstellung eines Strukturbauteils durch Kriechumformen des Halbzeugs und auf ein Halbzeug für die Reparatur eines Strukturbauteils.

### Bezugszeichenliste

- 1: Flugzeug
- 2: Rumpf
- 3: Flügel
- 4: Rumpfschale
- 5: Flügelschale
- 6: Strukturbauteil
- 7: Halbzeug
- 10: Anordnung
- 11: erste Bauteilkomponente
- 12: zweite Bauteilkomponente
- 13: thermoplastisches Kunststoffmaterial
- 14: obere Oberfläche (erste Bauteilkomponente)
- 14': Oberflächenabschnitt (obere Oberfläche)
- 15: untere Oberfläche (zweite Bauteilkomponente)
- 16: Form
- 17: Oberfläche (Form)
- 20: Stapel
- 21: erste Lage
- 22: zweite Lage
- 23: Stringer
- 24: erster Schenkel (Stringer)
- 25: zweiter Schenkel (Stringer)
- 26: Schalenhaut
- 27: Doppler
- 28: Schicht
- 31: dritte Bauteilkomponente
- 32: lokales Versteifungselement
- 33: Stringer
- 34: erster Schenkel (Stringer)
- 35: zweiter Schenkel (Stringer)
- 36: Lage
- 37: Schicht
- 38: Oberfläche (Lage)
- 39: Oberfläche (lokales Versteifungselement)
- 40: Klebstoffschicht
- 41: Bereich
- 42: Bereich
- 43: Doppler
- 43': Doppler
- 43'': Doppler
- 44: Strukturbauteil
- 45: Außenseite (Strukturbauteil)
- 46: Innenseite (Strukturbauteil)
- 47: Schadstelle
- 47': Schadstelle
- 47'': Schadstelle
- 48: Oberfläche (Strukturbauteil)
- 50: Oberfläche (Lage)
- 51: Lage
- 52: Schicht
- 53: Oberfläche (Lage)
- 54: mobile Spann- und Heizeinrichtung
- 55: Spannelement
- 56: Heizelement
- 61: Niet
- 62: Bereich
- 63: Bereich
- 64: Bereich

- D: Dicke
- D': Dicke
- F: Kraft
- P: Druck
- W: Wärme

## Patentansprüche

1. Verfahren zur Herstellung eines Strukturbauteils (6) mit zumindest zwei miteinander mittels eines thermoplastischen Kunststoffmaterials (13) verbundenen Bauteilkomponenten (11, 12), insbesondere für die Luft- oder Raumfahrt, wobei das Verfahren die folgenden Verfahrensschritte aufweist:
Bereitstellen und Anordnen einer ersten Bauteilkomponente (11) und einer zweiten Bauteilkomponente (12) zum Bilden einer Anordnung (10); und
**gekennzeichnet durch**
Kriechumformen der Anordnung (10) bei einer Temperatur, welche in der Weise gewählt wird, dass das thermoplastische Kunststoffmaterial (13) während des Kriechumformens für ein Verbinden der ersten Bauteilkomponente (11) und der zweiten Bauteilkomponente (12) zumindest teilweise aufschmilzt.

2. Verfahren nach Anspruch 1,
**dadurch gekennzeichnet,**
**dass** die erste Bauteilkomponente (11) und/oder die zweite Bauteilkomponente (12) zumindest teilweise aus einem Metall, insbesondere aus einer Aluminium-Magnesium-Legierung oder einer Aluminium-Magnesium-Scandium-Legierung, ausgebildet werden/wird.

3. Verfahren nach Anspruch 1 oder 2,
**dadurch gekennzeichnet,**
**dass** das Kriechumformen mittels einer Form (16) erfolgt, welche eine Oberfläche (17) aufweist, deren Geometrie einer Oberflächengeometrie des herzustellenden Strukturbauteils (6) in dessen fertigem Zustand im Wesentlichen entspricht.

4. Verfahren nach einem der vorstehenden Ansprüche,
**dadurch gekennzeichnet,**
**dass** das thermoplastische Kunststoffmaterial (13) beim Bilden der Anordnung (10) als Film oder als Folie zwischen die erste Bauteilkomponente (11) und die zweite Bauteilkomponente (12) eingelegt wird, wobei eine Stärke des Films oder der Folie bevorzugt in einem Bereich von 0,1 bis 0,6 mm liegt.

5. Verfahren nach einem der Ansprüche 1 bis 3,
**dadurch gekennzeichnet,**
**dass** die erste Bauteilkomponente (11) und/oder die zweite Bauteilkomponente (12) vor dem Bilden der Anordnung (10) zumindest abschnittsweise mit dem thermoplastischen Kunststoffmaterial (13) beschichtet werden/wird, insbesondere durch thermisches Spritzen des thermoplastischen Kunststoffmaterials (13) auf die jeweilige Bauteilkomponente (11, 12).

6. Verfahren nach einem der vorstehenden Ansprüche,
**dadurch gekennzeichnet,**
**dass** vor dem Bilden der Anordnung (10) oder während des Kriechumformens Verstärkungsfasern, bevorzugt Glasfasern, Kohlefasern oder Zylonfasern, in das thermoplastische Kunststoffmaterial (13) eingebettet werden.

7. Verfahren nach einem der vorstehenden Ansprüche,
**dadurch gekennzeichnet,**
**dass** Oberflächen (14, 15) der ersten und/oder der zweiten Bauteilkomponente (11, 12), welche zum Verbinden der ersten und zweiten Bauteilkomponente (11, 12) mit dem thermoplastischen Kunststoffmaterial (13) in Kontakt gebracht werden, vor dem Bilden der Anordnung (10) in der Weise vorbehandelt werden, dass die Haftung des thermoplastischen Kunststoffmaterials (13) auf den Oberflächen (14, 15) durch Aufschmelzen und Wiedererstarren des thermoplastischen Kunststoffmaterials (13) im Vergleich zu nicht vorbehandelten Oberflächen gesteigert wird, wobei die Oberflächen (14, 15) hierbei insbesondere gereinigt und nachfolgend insbesondere anodisiert oder mit einem Umwandlungsüberzug oder mit einer Sol-Gel-Schicht versehen werden.

8. Verfahren nach einem der vorstehenden Ansprüche,
**dadurch gekennzeichnet,**
**dass** die Temperatur in einem Bereich von 250°C bis 375°C und bevorzugt in einem Bereich von 275°C bis 375°C, und weiter bevorzugt in einem Bereich von 275°C bis 325°C, gewählt wird.

9. Verfahren nach einem der vorstehenden Ansprüche,
**dadurch gekennzeichnet,**
**dass** die Anordnung (10) während des Kriechumformens der Temperatur für eine Zeitdauer von zehn Minuten oder länger, bevorzugt für eine Zeitdauer in einem Bereich von zehn Minuten bis etwa drei Stunden, weiter bevorzugt für eine Zeitdauer in einem Bereich von etwa 30 Minuten bis zwei Stunden, ausgesetzt wird.

10. Verfahren nach einem der vorstehenden Ansprüche,
**dadurch gekennzeichnet,**
**dass** das Strukturbauteil (6) als ein Schalenbauteil, insbesondere als eine Rumpfschale (4), als ein Teil einer Rumpfschale (4), als eine Flügelschale (5) oder als ein Teil einer Flügelschale (5) eines Luft- oder Raumfahrzeugs (1), ausgebildet wird, wobei die erste Bauteilkomponente (11) eine Schalenhaut (26) und die zweite Bauteilkomponente (12) ein Versteifungselement für die Schalenhaut, insbesondere einen Stringer (23; 33), bilden.

11. Verfahren nach einem der vorstehenden Ansprüche,
**dadurch gekennzeichnet,**
**dass** die erste Bauteilkomponente (11) aus einem Halbzeug (7) mit mehreren Lagen (36) eines durch Kriechumformen umformbaren Materials, zwischen welchen eine Schicht (37) eines weiteren thermoplastischen Kunststoffmaterials, dessen Zusammensetzung mit jener des thermoplastischen Kunststoffmaterials (13) übereinstimmt oder sich von dieser unterscheidet, angeordnet ist, ausgebildet wird.

12. Verfahren nach einem der vorstehenden Ansprüche,
**dadurch gekennzeichnet,**
**dass** die zweite Bauteilkomponente (12) als Verbundkomponente mit einer Matrix aus dem thermoplastischen Kunststoffmaterial (13) ausgebildet wird, wobei vorzugsweise Verstärkungsfasern, insbesondere Glasfasern, Kohlefasern oder Zylonfasern, in die Matrix eingebettet werden, und dass die Matrix der zweiten Bauteilkomponente (12) bei dem Kriechumformen für ein Verbinden mit der ersten Bauteilkomponente (11) zumindest teilweise aufschmilzt.

13. Verfahren nach einem der vorstehenden Ansprüche,
**dadurch gekennzeichnet,**
**dass** die zweite Bauteilkomponente (12) als Verbundkomponente mit einer Matrix aus einem zweiten thermoplastischen Kunststoffmaterial ausgebildet wird, wobei vorzugsweise Verstärkungsfasern, insbesondere Glasfasern, Kohlefasern oder Zylonfasern, in die Matrix eingebettet werden, und wobei das zweite thermoplastische Kunststoffmaterial der Matrix bei dem Kriechumformen ohne aufzuschmelzen in der Weise erweicht, dass ein Umformen der zweiten Bauteilkomponente (12) während des Kriechumformens ermöglicht wird.

## Claims

1. Process for manufacturing a structural component (6) with at least two device components (11, 12) interconnected by means of a thermoplastic plastic material (13), for aviation or aerospace in particular, comprising the following steps:
preparation and arrangement of a first device component (11) and of a second device component (12) for forming an arrangement (10); and **characterised by**
creep forming of the arrangement (10) at a temperature chosen such that the thermoplastic plastic material (13) melts at least partially during creep forming for linking the first device component (11) and the second device component (12).

2. Process according to claim 1, **characterised in that** the first device component (11) and/or the second device component (12) is/are at least partially provided in a metal, in particular an aluminium-magnesium alloy or an aluminium-magnesium-scandium alloy.

3. Process according to claim 1 or claim 2, **characterised in that** creep forming is achieved by means of a mould (16) which has a surface (17) whose geometry largely corresponds to the surface geometry in its finished state of the structural component (6) which is to be manufactured.

4. Process according to any one of the preceding claims, **characterised in that** when forming the arrangement (10) the thermoplastic plastic material (13) is inserted as a film or foil between the first device component (11) and the second device component (12), the thickness of the film or foil preferably being in a range between 0.1 and 0.6 mm.

5. Process according to any one of claims 1 to 3, **characterised in that** before forming the arrangement (10) the first device component (11) and/or the second device component (12), at least in sections, is/are coated with the thermoplastic plastic material (13), particularly by thermal spraying of the thermoplastic plastic material (13) on to the respective device component (11, 12).

6. Process according to any one of the preceding claims, **characterised in that** before forming the arrangement (10) or during creep forming, reinforcing fibres, preferably glass fibres, carbon fibres or Zylon fibres, are embedded in the thermoplastic plastic material (13).

7. Process according to any one of the preceding claims, **characterised in that** surfaces (14, 15) of the first and/or second device component (11, 12), which are brought into contact with the thermoplastic plastic material (13) for linking the first and second device component (11, 12), are pre-treated prior to forming the arrangement (10) such that the adherence of the thermoplastic plastic material (13) to the surfaces (14, 15) by melting and re-solidification of the thermoplastic plastic material (13) is increased by comparison to surfaces that have not been pre-treated, wherein the surfaces (14, 15) are cleaned in particular and subsequently anodised in particular or are provided with a conversion coating or a sol-gel layer.

8. Process according to any one of the preceding claims, **characterised in that** the temperature is selected in a range of 250 °C to 375 °C and preferably in a range of 275 °C to 375 °C, and further preferably in a range of 275 °C to 325 °C.

9. Process according to any one of the preceding claims, **characterised in that** the arrangement (10) during the creep forming is exposed to the temperature for a duration of ten minutes or longer, preferably for a duration in a range of ten minutes to about three hours, further preferably for a duration in a range of about 30 minutes to two hours.

10. Process according to any one of the preceding claims, **characterised in that** the structural component (6) is provided as a shell component, in particular as a fuselage shell (4), as part of a fuselage shell (4), as a wing shell (5) or as part of a wing shell (5) of an aircraft or space vehicle (1), wherein the first device component (11) comprises a shell skin (26) and the second device component (12) comprises a reinforcing element for the shell skin, in particular a stringer (23; 33).

11. Process according to any one of the preceding claims, **characterised in that** the first device component (11) is provided from a semi-finished product (7) with several layers (36) of a material which can be shaped by creep forming, between said layers (36) a layer (37) of a further thermoplastic plastic material being provided, whose composition conforms with that of the thermoplastic plastic material (13) or differs therefrom.

12. Process according to any one of the preceding claims, **characterised in that** the second device component (12) is provided as a composite component with a matrix of the thermoplastic plastic material (13), wherein preferably reinforcing fibres, in particular glass fibres, carbon fibres or Zylon fibres are embedded in the matrix, and wherein the matrix of the second device component (12) melts at least partially during creep forming for linking with the first device component (11).

13. Process according to any one of the preceding claims, **characterised in that** the second device component (12) is provided as a composite component with a matrix from a second thermoplastic plastic material, wherein preferably reinforcing fibres, in particular glass fibres, carbon fibres or Zylon fibres, are embedded in the matrix, and wherein the second thermoplastic plastic material of the matrix is softened during creep forming without being melted, such that it becomes possible to shape the second device component (12) during creep forming.

## Revendications

1. Procédé de production d'un composant structural (6) comprenant au moins deux éléments constructifs (11, 12) reliés l'un à l'autre au moyen d'une matière plastique thermoplastique (13), en particulier la navigation aérienne ou spatiale, le procédé comportant les étapes de procédé suivantes :
fourniture et agencement d'un premier élément constructif (11) et d'un second élément constructif (12) afin de former un ensemble (10) ; et **caractérisé par**
le formage par fluage de l'ensemble (10) à une température, qui est choisie de telle manière que la matière plastique thermoplastique (13) fond au moins en partie pendant le formage par fluage pour une liaison du premier élément constructif (11) et du second élément constructif (12).

2. Procédé selon la revendication 1,
**caractérisé en ce que**
le premier élément constructif (11) et/ou le second élément constructif (12) est/sont constitué (s) au moins en partie d'un métal, en particulier d'un alliage aluminium-magnésium ou d'un alliage aluminium-magnésium-scandium.

3. Procédé selon la revendication 1 ou 2,
**caractérisé en ce que**
le formage par fluage se fait au moyen d'un moule (16), qui comporte une surface (17), dont la géométrie correspond sensiblement à une géométrie de surface du composant structural (6) à produire dans son état fini.

4. Procédé selon l'une des revendications précédentes,
**caractérisé en ce que**
la matière plastique thermoplastique (13) est insérée sous la forme d'un film ou d'une feuille entre le premier élément constructif (11) et le second élément constructif (12) pour former l'ensemble (10), une épaisseur du film ou de la feuille se trouvant de préférence comprise dans une plage de 0,1 à 0,6 mm.

5. Procédé selon l'une des revendications 1 à 3,
**caractérisé en ce que**
le premier élément constructif (11) et/ou le second élément constructif (12) est/sont revêtu(s) au moins par section de la matière plastique thermoplastique (13) avant la formation de l'ensemble (10), en particulier par projection thermique de la matière plastique thermoplastique (13) sur l'élément constructif (11, 12) respectif.

6. Procédé selon l'une des revendications précédentes,
**caractérisé en ce que**,
avant la formation de l'ensemble (10) ou pendant le formage par fluage, des fibres de renforcement, de préférence des fibres de verre, des fibres de carbone ou des fibres de Zylon sont incorporées dans la matière plastique thermoplastique (13).

7. Procédé selon l'une des revendications précédentes,
**caractérisé en ce que** des surfaces (14, 15) du premier et/ou du second élément constructif (11, 12), qui sont amenées en contact avec le matériau synthétique thermoplastique (13) pour relier le premier et le second élément constructif (11, 12), sont prétraitées avant la formation de l'ensemble (10) de telle manière que l'adhérence de la matière plastique thermoplastique (12) sur les surfaces (14, 15) est augmentée par rapport à des surfaces non prétraitées par la fusion et la resolidification de la matière plastique thermoplastique (13), les surfaces (14, 15) étant alors en particulier nettoyées et ensuite en particulier anodisées ou pourvues d'un revêtement de conversion ou d'une couche sol-gel.

8. Procédé selon l'une des revendications précédentes,
**caractérisé en ce que**
la température est choisie comprise dans une plage de 250 °C à 375 °C et de préférence dans une plage de 275 °C à 375 °C, et de préférence encore dans une plage de 275 °C à 325 °C.

9. Procédé selon l'une des revendications précédentes,
**caractérisé en ce que**
pendant le formage par fluage, l'ensemble (10) est soumis à la température pendant une durée de dix minutes ou plus, de préférence pendant une durée comprise dans une plage de dix minutes à environ trois heures, de préférence encore pendant une durée comprise dans une plage d'environ 30 minutes à deux heures.

10. Procédé selon l'une des revendications précédentes,
**caractérisé en ce que**
le composant structural (6) se présente sous la forme d'un élément de coque, en particulier d'une coque de fuselage (4), d'une partie d'une coque de fuselage (4), d'une coque d'aile (5) ou d'une partie d'une coque d'aile (5) d'un aéronef ou véhicule spatial (1), le premier élément constructif (11) formant un revêtement de coque (26) et le second élément constructif (12) un élément de renforcement pour le revêtement de coque, en particulier une lisse (23 ; 33).

11. Procédé selon l'une des revendications précédentes,
**caractérisé en ce que**
le premier élément constructif (11) est constitué d'un produit semi-fini (7) comprenant plusieurs strates (36) d'un matériau pouvant être formé par formage par fluage, entre lesquelles est disposée une couche (37) d'une autre matière plastique thermoplastique, dont la composition correspond à celle de la matière plastique thermoplastique (13) ou diffère de celle-ci.

12. Procédé selon l'une des revendications précédentes,
**caractérisé en ce que**
le second élément constructif (12) se présente sous la forme d'un constituant composite comprenant une matrice en une matière plastique thermoplastique (13), des fibres de renforcement, en particulier des fibres de verre, des fibres de carbone ou des fibres de Zylon, étant de préférence incorporées dans la matrice, et **en ce que** la matrice du second élément constructif (12) fond au moins en partie lors du formage par fluage pour une liaison avec le premier élément constructif (11).

13. Procédé selon l'une des revendications précédentes,
**caractérisé en ce que**
le second élément constructif (12) se présente sous la forme d'un constituant composite comprenant une matrice d'une seconde matière plastique thermoplastique, des fibres de renforcement, en particulier des fibres de verre, des fibres de carbone ou des fibres de Zylon, étant de préférence incorporées dans la matrice, et la seconde la matière plastique thermoplastique de la matrice se ramollissant sans fusion lors du formage par fluage de telle manière qu'un formage du second élément constructif (12) est rendu possible pendant le formage par fluage.
